(19) Europäisches Patentamt
European Patent Office
Office européen des brevets

(11) **EP 3 009 375 B1**

(12) **EUROPEAN PATENT SPECIFICATION**

(45) Date of publication and mention of the grant of the patent:
**15.05.2019 Bulletin 2019/20**

(21) Application number: **14811569.4**

(22) Date of filing: **10.06.2014**

(51) Int Cl.:
**B65D 81/24** $^{(2006.01)}$

(86) International application number:
**PCT/JP2014/065323**

(87) International publication number:
**WO 2014/199977 (18.12.2014 Gazette 2014/51)**

(54) **PACKAGING BODY AND STORAGE METHOD**

VERPACKUNGSKÖRPER UND AUFBEWAHRUNGSVERFAHREN

CORPS D'EMBALLAGE ET PROCÉDÉ DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 JP 2013123929**
**07.08.2013 JP 2013164303**

(43) Date of publication of application:
**20.04.2016 Bulletin 2016/16**

(73) Proprietor: **Mitsubishi Gas Chemical Company, Inc.**
**Tokyo 100-8324 (JP)**

(72) Inventors:
• **ODA, Takafumi**
**Hiratsuka-shi**
**Kanagawa 254-0016 (JP)**
• **SATO, Kazuya**
**Hiratsuka-shi**
**Kanagawa 254-0016 (JP)**
• **KATO, Tomonori**
**Hiratsuka-shi**
**Kanagawa 254-0016 (JP)**
• **MIYABE, Takanori**
**Hiratsuka-shi**
**Kanagawa 254-0016 (JP)**
• **MITADERA, Jun**
**Hiratsuka-shi**
**Kanagawa 254-0016 (JP)**

(74) Representative: **Vossius & Partner Patentanwälte Rechtsanwälte mbB**
**Siebertstrasse 3**
**81675 München (DE)**

(56) References cited:
| | |
| --- | --- |
| EP-A1- 2 402 396 | JP-A- 2003 285 879 |
| JP-A- 2007 270 141 | JP-A- 2009 108 153 |
| JP-A- 2011 037 136 | JP-A- 2011 037 136 |

• **SCHMID, MARKUS ET AL.:** 'Temperature-dependent Oxygen Permeation through PET/MXD6-Barrier Blend Bottles with and without Oxygen Absorber' POSTER PRESENTATION AT THE 5TH INTERNATIONAL SYMPOSIUM ON FOOD PACKAGING 14 November 2012, BERLIN, XP008181816 Retrieved from the Internet: <URL:http://www.ilsi.org/europe/documents/131.pdf> [retrieved on 2014-07-31]

**Description**

Technical Field

The present invention relates to a packaging body and a method for preserving goods. In detail, the present invention relates to a packing body which is able to suppress oxidation deterioration of the contents from the beginning of preservation, is excellent in visibility of the contents, and is suitable for preservation of goods such as foods, beverages, and pharmaceutical products, etc., and to a method for preserving goods.

Background Art

At the present time, polyesters typified by polyethylene terephthalate (PET) and the like are widely utilized for a variety of packaging materials, such as films, sheets, hollow containers, etc., in view of the fact that they have such advantages that they are excellent in transparency, mechanical performance, melt stability, aroma retention properties, recycling properties, or the like. However, the polyesters are not always satisfactory in gas barrier properties against oxygen, a carbon dioxide gas, or the like, and thus, the use range of a packaging container made of a polyester was restricted.

Then, as means for improving simply the gas barrier properties of the polyester, there is exemplified a method of melt mixing a polyester resin with a thermoplastic resin having high gas barrier properties. Examples of such a resin having high gas barrier properties include polyamides typified by nylon 6, nylon 66, and the like.

Polymetaxylylene adipamide (MXD6) which is obtained by polymerization between a diamine component containing as a main component metaxylylenediamine and a dicarboxylic acid component containing as a main component adipic acid is a polyamide that is excellent especially in gas barrier properties. MXD6 closely resemble to PET which is especially widely utilized among polyesters, in terms of glass transition temperature, melting point, and crystallinity, and thus, MXD6 does not impair processability of the polyester. From this fact, a mixture of PET and MXD6 can be processed while applying a molding processing condition of PET substantially as they are, and therefore, such a mixture is applied to various packaging materials, such as films, bottles, etc.

In addition, MXD6 containing a transition metal, such as cobalt, etc., has oxygen absorption performance in addition to the gas barrier properties, and thus, such MXD6 is widely used for food packaging materials and the like for the purpose of suppressing oxidation deterioration of the contents. It may be considered that the aforementioned oxygen absorption performance is exhibited due to a series reaction (oxidation reaction) including generation of a radical to be caused due to abstraction of a hydrogen atom from a methylene chain adjacent to an arylene group of MXD6, generation of a peroxy radical by addition of an oxygen molecule to the aforementioned radical, and abstraction of the hydrogen atom by the peroxy radical (PTL 1).

In general, a phosphorus compound is added at the time of production of MXD6 for the purpose of, for example, promoting the polymerization reaction, and therefore, the MXD6 typically contains about several hundred ppm of phosphorus. However, it is known that if the phosphorus content in MXD6 is large, phosphorus acts as a reducing agent in the aforementioned oxidation reaction of MXD6, and as a result, an induction period until the oxygen absorption performance is exhibited becomes long (PTL 2). Then, PTL 2 discloses that in a packaging material containing cobalt, which is based on a blended material containing a polyamide obtained by a condensation reaction between m-xylylenediamine and adipic acid and poly(ethylene terephthalate), the phosphorus content in the polyamide is controlled to less than a fixed amount, whereby the induction period until the oxygen absorption performance is exhibited can be shorten.

Document JP 2011 037136 discloses in Table 1, for instance in example 4, a specific bottle having, among others, an increase rate of the Haze value of 4%, and made from a composition comprising PET and a polyamide. The phosphorous content is 1-500 ppm in certain polyamides described in this document.

Citation List

Patent Literature

    PTL 1: JP-A-2003-341747
    PTL 2: JP-A-H6-41422

Summary of Invention

Technical Problem

As described above, it is known that if the phosphorus content in the MXD6 containing a transition metal is made small, the induction period until the oxygen absorption performance is exhibited becomes short. However, if the phosphorus content in the MXD6 is made small, there was a concern that on processing the MXD6, coloration is liable to be generated, resulting in worsening of color tone of a packaging material. For this reason, there have been demanded a packaging material and a preservation method, in which the induction period until the oxygen absorption performance is exhibited is short without relying upon the phosphorus content in the MXD6 and preservability of the contents is excellent.

Meanwhile, in a packaging material including PET and MXD6, if the addition amount of MXD6 is large, the packaging material becomes cloudy, resulting in a lowering of visibility of the contents. However, if the addition amount of MXD6 is made smaller than it need be, the oxygen absorption performance of the packaging material is lowered, too, and the initial oxygen transmission quantity becomes high. Thus, there was encountered such a problem that the preservability of the contents is significantly lowered.

A problem of the present invention is to provide a packaging body which is not only capable of suppressing oxidation deterioration of the contents from the beginning of preservation but also excellent in visibility of the contents, without relying upon the phosphorus content in a polyamide resin to be used for the packaging body, and also a method for preserving goods.

Solution to Problem

As a result of extensive and intensive investigations made by the present inventors, it has been found that the aforementioned problem can be solved by a packaging body consisting of a resin composition containing a polyester resin, a polyamide resin, and an oxidation reaction accelerator, the packaging body satisfying prescribed conditions.

In addition, the present inventors have found that the aforementioned problem can be solved by a method for preserving goods by filling in a packaging body containing a polyester resin, a polyamide resin, and an oxidation reaction accelerator, wherein a content of the polyamide resin in the packaging body is allowed to fall within a prescribed range, and an oxygen transmission rate with time of the packaging body satisfies prescribed conditions.

The present invention has been accomplished on the basis of such findings.

Specifically, the present invention is concerned with the following [1] and [2].

[1] A packaging body consisting of a resin composition containing a polyester resin (A), a polyamide resin (B), and an oxidation reaction accelerator (C), wherein the amount of a phosphorous atom-containing compound in the polyamide resin (B) is 5 to 500 ppm, in terms of a phosphorous atom concentration in the polyamide resin (B), when a thickness of the packaging body is defined as d ($\mu$m), and an average long diameter, an average short diameter, and a volume fraction of dispersed particles of the polyamide resin (B) in the packaging body are defined as L ($\mu$m), W ($\mu$m), and Vf, respectively, the following expression (1A) is satisfied; an oxygen transmission rate after a lapse of 100 hours after preparing of the packaging body is 0.006 [cc/(package · day · 21278 Pa (0.21 atm))] or less; and a haze value is 8% or less.

$$10 < d \times L \times Vf/2W < 120 \qquad (1A)$$

[2] A method for preserving goods, wherein said packaging body is used.

Advantageous Effects of Invention

The packaging body and the preservation method according to the present invention are not only capable of suppressing oxidation deterioration of the contents from the beginning of preservation but also excellent in visibility of the contents, without relying upon the phosphorus content in a polyamide resin to be used for the packaging body. For that reason, the packaging body and the preservation method according to the present invention are suitably used for preservation of various goods, such as foods, beverages, and pharmaceutical products, etc.

Brief Description of Drawings

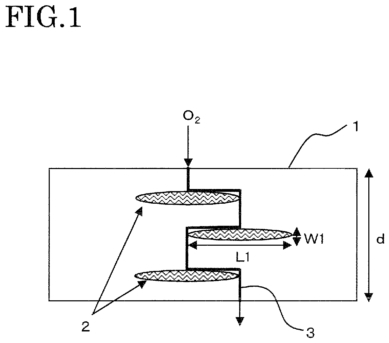

Fig. 1 is a diagrammatic view showing a path of an oxygen molecule when the oxygen molecule moves (transmits) from an exterior of a packaging body toward the interior direction.

Description of Embodiments

(Packaging Body)

The packaging body of the present invention is a packaging body consisting of a resin composition containing a polyester resin (A), a polyamide resin (B), and an oxidation reaction accelerator (C), wherein the amount of a phosphorous atom-containing compound in the polyamide resin (B) is 5 to 500 ppm, in terms of a phosphorous atom concentration in the polyamide resin (B), when a thickness of the packaging body is defined as d ($\mu$m), and an average long diameter, an average short diameter, and a volume fraction of dispersed particles of the polyamide resin (B) in the packaging body are defined as L ($\mu$m), W ($\mu$m), and Vf, respectively, the following expression (1A) is satisfied; an oxygen transmission rate after a lapse of 100 hours after preparing of the packaging body is 0.006 [cc/(package $\cdot$ day $\cdot$ 21278 Pa (0.21 atm))] or less; and a haze value is 8% or less.

$$10 < d \times L \times Vf/2W < 120 \qquad (1A)$$

and X is 0.006 or less. The term "[cc/(package $\cdot$ day $\cdot$ 21278 Pa (0.21 atm))]" is a unit expressing a quantity of oxygen transmitting through one packaging body per day under a condition at an oxygen partial pressure of 21278 Pa (0.21 atm).
The packaging body of the present invention is hereunder explained in detail.
The packaging body of the present invention consists of a resin composition containing a polyester resin (A), a polyamide resin (B), and an oxidation reaction accelerator (C).

[Polyester Resin (A)]

The polyester resin (A) is used as a main component of the packaging body. From the viewpoints of crystallinity, mechanical characteristics, and the like, it is preferred that the polyester resin (A) contains an aromatic dicarboxylic acid unit and an aliphatic diol unit. From the viewpoints of crystallinity of the polyester resin (A) and easiness of drying prior to the use, the aromatic dicarboxylic acid unit contains a terephthalic acid unit in a content of preferably 70 mol% or more, more preferably 80 mol% or more, and still more preferably 90 to 100 mol%. From the same viewpoints, the aliphatic diol unit contains an aliphatic glycol unit having 2 to 4 carbon atoms in a content of preferably 70 mol% or more, more preferably 80 mol% or more, and still more preferably 90 to 100 mol%.
As other aromatic dicarboxylic acids than terephthalic acid and derivatives thereof, which may constitute the aromatic dicarboxylic acid unit of the polyester resin (A), dicarboxylic acids having an aromatic nucleus such as benzene, naphthalene, diphenyl, oxydiphenyl, sulfonyldiphenyl, methylenediphenyl, etc., and derivatives thereof may be used. Among those, isophthalic acid, naphthalenedicarboxylic acids such as 2,6-naphthalenedicarboxylic acid, 1,5-naphthalenedicarboxylic acid, 2,7-naphthalenedicarboxylic acid, etc., 4,4'-biphenyldicarboxylic acid, 3,4'-biphenyldicarboxylic acid, and the like, and derivatives thereof are preferred. Above all, isophthalic acid, 2,6-naphthalenedicarboxylic acid, and derivatives thereof are more preferably used; and isophthalic acid and derivatives thereof are still more preferably used. These may be used solely or in combination of two or more kinds thereof.
In the case of using isophthalic acid as the dicarboxylic acid component that constitutes the aromatic dicarboxylic acid unit of the polyester resin (A), its proportion (proportion of the isophthalic acid unit) is preferably 1 to 10 mol%, more preferably 1 to 8 mol%, and still more preferably 1 to 6 mol% relative to a total amount of the dicarboxylic acid unit. A copolymerization resin using isophthalic acid as the dicarboxylic acid component in the foregoing proportion becomes low in crystallinity, so that it becomes possible to enhance moldability.
In order to improve compatibility with the polyamide resin (B) as described later, dicarboxylic acids having an aromatic nucleus, in which a sulfonic acid metal salt group is bound to a benzene, naphthalene, diphenyl, oxydiphenyl, sulfonyldiphenyl, or methylenediphenyl nucleus, and derivatives thereof may also be used as the dicarboxylic acid component that constitutes the polyester resin (A).
For example, there are exemplified compounds in which the metal ion of the sulfonic acid salt is a metal ion selected from an alkali metal ion such as lithium, sodium, potassium, etc., an alkaline earth metal ion such as magnesium, calcium, etc., a zinc ion, and the like; and the aromatic acid nucleus is selected from sulfophthalic acid, sulfoterephthalic acid, sulfoisophthalic acid, 4-sulfonaphthalene-2,7-dicarboxylic acid, and derivatives thereof. Above all, from the standpoint of compatibility with the polyamide resin (B), sulfoisophthalic acid metal salts such as sodium 5-sulfoisophthalate, lithium 5-sulfoisophthalate, zinc 5-sulfoisophthalate, etc., and derivatives thereof are preferred; and sulfoisophthalic acid alkali metal salts such as sodium 5-sulfoisophthalate, etc., are more preferred. These may be used solely or in combination of two or more kinds thereof.
In the case of using the aforementioned compound as the dicarboxylic acid component that constitutes the polyester resin (A), its proportion (proportion of the unit derived from the aforementioned compound) is preferably 0.01 to 2 mol%, more preferably 0.03 to 1.5 mol%, and still more preferably 0.05 to 1.0 mol% relative to a total amount of the dicarboxylic acid unit. By allowing the proportion of the aforementioned compound to fall within this range, the compatibility with the polyamide resin (B) may be improved without impairing the characteristics of the polyester resin (A). In addition, by allowing the proportion of the aforementioned compound to fall within this range, the polyamide resin (B) may be finely dispersed in the polyester resin (A), so that transparency of the packaging body may be enhanced.

Furthermore, aliphatic dicarboxylic acids such as adipic acid, azelaic acid, sebacic acid, etc.; monocarboxylic acids such as benzoic acid, propionic acid, butyric acid, etc.; polyvalent carboxylic acids such as trimellitic acid, pyromellitic acid, etc.; carboxylic acid anhydrides such as trimellitic anhydride, pyromellitic anhydride, etc.; and the like may be used as the dicarboxylic acid that constitutes the polyester resin (A), within the range where the effects of the present invention are not impaired.

As the diol that may constitute the diol unit of the polyester resin (A), aliphatic diols are preferred; and at least one glycol selected from aliphatic glycols having 2 to 4 carbon atoms is preferred. As the glycol, ethylene glycol and butylene glycol are preferably used, and ethylene glycol is especially preferably used. These diols may be used solely or in combination of two or more kinds thereof.

As other diol components than the aliphatic glycol having 2 to 4 carbon atoms, which may be used, there may be exemplified 1,4-cyclohexanedimethanol, 1,6-hexanediol, and the like, and ester forming derivatives thereof. Furthermore, monoalcohols such as butyl alcohol, hexyl alcohol, octyl alcohol, etc.; polyhydric alcohols such as trimethylolpropane, glycerin, pentaerythritol, etc.; diol components having a cyclic acetal skeleton; and the like may also be used within the range where the effects of the present invention are not impaired.

The polyester resin (A) is one obtained by a reaction between a dicarboxylic acid and a diol, and preferably between an aromatic dicarboxylic acid and an aliphatic diol, and for the production thereof, a direct esterification method and an ester interchange method, both of which are a known method, may be applied. As a polycondensation catalyst at the time of producing the polyester resin (A), there may be exemplified known compounds inclusive of antimony compounds such as antimony trioxide, antimony pentoxide, etc., germanium compounds such as germanium oxide, etc., and the like. If desired, in order to increase the molecular weight, solid phase polymerization may be performed by a conventionally known method.

Examples of the polyester resin which is preferred in the present invention include polyethylene terephthalate, an ethylene terephthalate-isophthalate copolymer, an ethylene terephthalate-sulfoisophthalic acid metal salt copolymer, an ethylene terephthalate-isophthalate-sulfoisophthalic acid metal salt copolymer, an ethylene- 1,4-cyclohexanedimethylene-terephthalate copolymer, polyethylene-2,6-naphthalenedicarboxylate, an ethylene-2,6-naphthalenedicarboxylate-terephthalate copolymer, an ethylene-terephthalate-4,4'-biphenyldicarboxylate copolymer, and the like. The polyester resin is especially preferably at least one selected from polyethylene terephthalate, an ethylene terephthalate-isophthalate copolymer, an ethylene terephthalate-sulfoisophthalic acid metal salt copolymer, an ethylene terephthalate-isophthalate-sulfoisophthalic acid metal salt copolymer.

The aforementioned polyester resin (A) may be used solely or in combination of two or more kinds thereof.

It is preferred to dry the polyester resin (A) prior to the use to such an extent that its moisture content is 200 ppm or less, preferably 100 ppm or less, and more preferably 50 ppm or less.

Although an limiting viscosity (value measured at 25°C in a mixed solvent of phenol/1,1,2,2-tetrachloroethane in mass ratio of 60/40) of the polyester resin (A) is not particularly limited, it is preferred that the limiting viscosity of the polyester resin (A) is typically 60 to 200 cm$^3$/g (0.6 to 2.0 dL/g) and preferably 70 to 180 cm$^3$/g (0.7 to 1.8 dL/g). So long as the limiting viscosity falls within the range of from 6 to 20 cm /g, the molecular weight of the polyester resin is thoroughly high, and the viscosity at the time of melting is not excessively high, so that a packaging body may be easily produced, and mechanical characteristics necessary as a structure may be exhibited.

[Polyamide Resin (B)]

The polyamide resin (B) is used for the purposes of improving gas barrier properties of the packaging body and further giving oxygen absorption performance to the packaging body by combination with the oxidation reaction accelerator (C) as described later.

A mechanism of exhibiting the oxygen absorption performance by the polyamide resin (B) and the oxidation reaction accelerator (C) is as follows. First of all, a hydrogen atom in the polyamide resin (B) is abstracted due to the oxidation reaction accelerator (C), thereby generating a radical. To this radical, an oxygen molecule is added to generate a peroxy radical. Furthermore, a radical chain reaction in which the hydrogen atom is again abstracted from the polyamide resin (B) by this peroxy radical (this chain reaction will be hereinafter also referred to simply as "oxidation reaction") occurs. In the light of the above, since the generated radical to be caused due to the action between the polyamide resin (B) and the oxidation reaction accelerator (C) captures the oxygen molecule, the oxygen absorption performance of the packaging body is exhibited.

From the viewpoint of gas barrier properties, it is preferred that a diamine unit in the polyamide resin (B) contains a xylylenediamine unit. A content of the xylylenediamine unit contained in the diamine unit is preferably 70 mol% or more, more preferably 80 mol% or more, and still more preferably 90 to 100 mol%. By setting the content of the xylylenediamine unit in the diamine unit to 70 mol% or more, the gas barrier properties of the resulting polyamide resin may be efficiently improved. From the viewpoints of gas barrier properties, oxygen absorption performance, and mechanical characteristics, the xylylenediamine is preferably metaxylylenediamine, paraxylylenediamine, or a mixture thereof, and from the viewpoint of gas barrier properties, the xylylenediamine unit is more preferably a metaxylylenediamine unit.

As other diamines than the xylylenediamine, which may be used, there may be exemplified aromatic diamines such as p-phenylenediamine, bis(4-aminophenyl)ether, bis(aminomethyl)naphthalene, etc.; diamines having an alicyclic structure such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; and aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, 2,4,4-trimethylhexamethylenediamine, 2-methyl-1,5-pentanediamine, etc. However, it should not be construed that the diamine is limited to thereto. The aforementioned diamines may be used solely or in combination of two or more kinds thereof.

From the viewpoints of gas barrier properties and crystallinity, a dicarboxylic acid unit in the polyamide resin (B) is preferably an $\alpha,\omega$-aliphatic dicarboxylic acid unit. The dicarboxylic acid unit contains the $\alpha,\omega$-aliphatic dicarboxylic acid unit in a content of preferably 70 mol% or more, more preferably 75 mol% or more, and still more preferably 80 to 100 mol%. By setting the content of the $\alpha,\omega$-aliphatic dicarboxylic acid unit to 70 mol% or more, a lowering of the gas barrier properties or an excessive lowering of the crystallinity may be avoided.

Examples of an $\alpha,\omega$-aliphatic dicarboxylic acid that constitutes the $\alpha,\omega$-aliphatic dicarboxylic acid unit include oxalic acid, malonic acid, succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like. Of these, adipic acid and sebacic acid are preferably used, and adipic acid is more preferably used.

As other dicarboxylic acids than the $\alpha,\omega$-aliphatic dicarboxylic acid, there may be exemplified alicyclic dicarboxylic acids such as 1,3-cyclohexanedicarboxylic acid, 1,4-cyclohexanedicarboxylic acid, etc.; aromatic dicarboxylic acids such as terephthalic acid, isophthalic acid, orthophthalic acid, xylylenedicarboxylic acid, naphthalenedicarboxylic acid, etc.; and the like. However, it should not be construed that the dicarboxylic acid is limited to thereto.

The aforementioned dicarboxylic acids may be used solely or in combination of two or more kinds thereof.

The constituent unit of the polyamide resin (B) may include, in addition to the aforementioned diamine unit and dicarboxylic acid unit, a constituent unit derived from lactams such as $\varepsilon$-caprolactam, laurolactam, etc.; aliphatic aminocarboxylic acids such as aminocaproic acid, aminoundecanoic acid, etc.; aromatic aminocarboxylic acids such as p-aminomethylbenzoic acid, etc.; and the like, within the range where the effects of the present invention are not impaired.

It is preferred that the polyamide resin (B) which is used in the present invention contains polymetaxylylene adipamide from the viewpoint of giving a high oxygen absorption performance to the packaging body and also from the viewpoint of molding processability on blending with the polyester resin (A). A content of the polymetaxylylene adipamide in the polyamide resin (B) is preferably 70% by mass or more, more preferably 80% by mass or more, and still more preferably 90 to 100% by mass.

Although the production method of the polyamide resin (B) is not particularly limited, for example, the polyamide resin (B) may be produced by a melt polycondensation (melt polymerization) method. Examples of the melt polycondensation method include a method in which a salt composed of a diamine and a dicarboxylic acid is polymerized in a molten state in the presence of water under an elevated pressure by raising the temperature while removing the added water and condensed water. The polyamide resin (B) may also be produced by a method of performing polycondensation by adding a diamine directly to a dicarboxylic acid in a molten state. In this case, in order to keep the reaction system in a uniform liquid state, the diamine is continuously added to the dicarboxylic acid, and the polycondensation is advanced while subjecting the reaction system to temperature rise such that during that time, the reaction temperature does not fall below a melting point of each of the formed oligoamide and polyamide.

In order to obtain an effect for promoting the amidation reaction or an effect for preventing the coloration at the time of polycondensation, a phosphorus atom-containing compound may be added to the polycondensation system of the polyamide resin (B). Examples of the phosphorus atom-containing compound include dimethylphosphinic acid, phenylmethylphosphinic acid, hypophosphorous acid, sodium hypophosphite, potassium hypophosphite, lithium hypophosphite, calcium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like. Of these, in particular, hypophosphorous acid metal salts such as sodium hypophosphite, potassium hypophosphite, lithium hypophosphite, etc., are preferably used, because they are high in terms of an effect for promoting the amidation reaction and also excellent in terms of a coloration preventing effect. In particular, sodium hypophosphite is preferred, but it should not be construed that the phosphorus atom-containing compound which may be used in the present invention is limited thereto.

The aforementioned phosphorus atom-containing compounds may be used solely or in combination of two or more kinds thereof.

An addition amount of the phosphorus atom-containing compound which is added to the polycondensation system of the polyamide resin (B) is 5 to 500 ppm, more preferably 10 to 400 ppm, still more preferably 10 to 300 ppm, and especially preferably 10 to 150 ppm in terms of a phosphorus atom concentration in the finally obtained polyamide resin (B).

The phosphorus atom acts as a reducing agent relative to the aforementioned oxidation reaction of the polyamide resin (B) in the packaging body, and hence, it impairs the exhibition of oxygen absorption performance. However, in the present invention, both preservability and visibility of the contents may be made compatible with each other without relying upon the phosphorus content in the polyamide resin (B) to be used for the packaging body.

In addition, when the phosphorus atom-containing compound is added within the foregoing range, the occurrence of the matter that the amidation reaction is promoted to prolong the polymerization reaction is not caused, and not only coloration of the polyamide resin (B) during the polycondensation is prevented from occurring, but also gelation of the polyamide resin (B) is suppressed, whereby the appearance of a molded article may be kept favorable.

It is preferred that an alkaline metal compound such as an alkali metal compound, an alkaline earth metal compound, etc., is added in combination with the phosphorus atom-containing compound to the polycondensation system of the polyamide resin (B). According to this, the amidation reaction rate is regulated, whereby gelation of the polyamide may be suppressed. Examples of the alkaline metal compound include alkali metal or alkaline earth metal hydroxides such as lithium hydroxide, sodium hydroxide, potassium hydroxide, rubidium hydroxide, cesium hydroxide, magnesium hydroxide, calcium hydroxide, barium hydroxide, etc.; alkali metal or alkaline earth metal acetates such as lithium acetate, sodium acetate, potassium acetate, rubidium acetate, cesium acetate, magnesium acetate, calcium acetate, barium acetate, etc.; and the like. However, the alkaline metal compound may be used without being limited to these compounds.

The aforementioned alkaline metal compounds may be used solely or in combination of two or more kinds thereof.

In the case of adding the alkaline metal compound to the polycondensation system of the polyamide resin (B), a value obtained by dividing the molar number of the compound by the molar number of the phosphorus atom-containing compound is preferably 0.5 to 2.0, more preferably 0.5 to 1.8, and still more preferably 0.6 to 1.5. By allowing the subject value to fall within the foregoing range, it becomes possible to suppress the formation of a gel while obtaining an effect for promoting the amidation reaction by the phosphorus atom-containing compound.

The polyamide resin (B) obtained by melt polycondensation is once taken out, pelletized, and then dried for use. In addition, for the purpose of further increasing the degree of polymerization, solid phase polymerization may also be performed. As a heating apparatus which is used for drying and solid phase polymerization, a continuous heat drying apparatus, a rotary drum-type heating apparatus called a tumble dryer, a conical dryer, a rotary dryer, or the like, or a or a cone-type heating apparatus equipped with a rotary blade in the inside thereof, called a Nauta mixer may be suitably used. However, a known method and a known apparatus can be used without being limited thereto. In particular, in the case of performing solid phase polymerization of the polyamide resin, among the aforementioned apparatuses, a batch-type heating apparatus is preferably used because the inside of the system may be hermetically sealed, and the polycondensation is easily advanced in such a state that oxygen as a cause of coloration is removed.

A relative viscosity of the polyamide resin (B) is preferably 1.5 to 4.2, more preferably 1.6 to 3.5, and still more preferably 1.7 to 3.0. By setting the relative viscosity of the polyamide resin (B) to the foregoing range, molding processability is stable, and a product with favorable appearance is obtained.

The relative viscosity as referred to herein is a ratio of a fall time (t) obtained by dissolving 0.2 g of the polyamide resin in 20 cm$^3$ of 96% by mass sulfuric acid and measuring the solution at 25°C by a Cannon-Fenske viscometer to a fall time ($t_0$) of the 96% by mass sulfuric acid itself as similarly measured and is expressed according to the following expression. Specifically, the relative viscosity may be measured by a method described in the Examples.

$$\text{Relative viscosity} = t/t_0$$

A number average molecular weight (Mn) of the polyamide resin (B) is in the range of preferably from 8,000 to 50,000, and more preferably from 10,000 to 30,000 from the viewpoints of compatibility with the polyester resin (A) and molding processability. Specifically, the number average molecular weight of the polyamide resin (B) may be measure by a method described in the Examples.

From the same reasons as those as described above, a phosphorus atom concentration in the polyamide resin (B) is preferably 5 to 500 ppm, more preferably 10 to 400 ppm, still more preferably 10 to 300 ppm, and especially preferably 10 to 150 ppm.

The phosphorus atom concentration in the polyamide resin (B) may be measured by a known method, for example, ICP emission spectral analysis, ICP mass analysis, X-ray fluorescence analysis, etc. Specifically, the phosphorus atom concentration in the polyamide resin (B) may be measured by a method described in the Examples.

A content of the polyamide resin (B) in the packaging body of the present invention is preferably 2.0 to 3.5% by mass. So long as the content of the polyamide resin (B) is 2.0% by mass or more, the induction period until the oxygen absorption performance is exhibited may be shorten, so that the preservability of the contents becomes favorable. So long as it is 3.5% by mass or less, the visibility of the contents becomes favorable. From the viewpoint of preservability of the contents, the content of the polyamide resin (B) in the packaging body is more preferably 2.2% by mass or more, and still more preferably 2.5% by mass or more. From the viewpoint of visibility of the contents, the content of the polyamide resin (B) in the packaging body is more preferably 3.2% by mass or less, and still more preferably 3.0% by mass or less.

The resin component which is used for the packaging body may contain other resin than the polyester resin (A) and the polyamide resin (B) within the range where the effects of the present invention are not impaired. Examples of such other resin include various polyamides such as nylon 6, nylon 66, an amorphous nylon utilizing an aromatic dicarboxylic acid as a monomer, etc., and modified resins thereof, polyolefins and modified resins thereof, elastomers having styrene in a skeleton thereof, and the like.

In the resin component in the packaging body, a content of the resin component other than the polyester resin (A) and the polyamide resin (B) is preferably 10% by mass or less, more preferably 5% by mass or less, still more preferably 2% by mass or less, and especially preferably 0% by mass from the standpoint of exhibiting the effects of the present invention.

[Oxidation Reaction Accelerator (C)]

The oxidation reaction accelerator (C) is used for the purpose of inducing an oxidation reaction of the polyamide resin (B) in the packaging body of the present invention as described above, thereby exhibiting the oxygen absorption performance. According to this, the oxidation deterioration of the contents may be suppressed, thereby enabling the preservability to be enhanced.

Although the oxidation reaction accelerator (C) may be any material so long as it brings the aforementioned effects, it is preferably a compound containing a transition metal element from the viewpoint of accelerating the oxidation reaction of the polyamide resin (B). The transition metal element is preferably at least one selected from transition metals belonging to the group VIII of the periodic table of the elements, manganese, copper, and zinc, and from the viewpoint of exhibiting the oxygen absorption performance, the transition metal element is more preferably at least one selected from cobalt, iron, manganese, and nickel, with cobalt being still more preferred.

Such oxidation reaction accelerator (C) is used in a form of, besides an elemental substance of the aforementioned metal, a low-valent oxide, an inorganic acid salt, an organic acid salt, or a complex salt containing the aforementioned metal. Examples of the inorganic acid salt include halides such as chlorides, bromides, etc., carbonates, sulfates, nitrates, phosphates, silicates, and the like. Meanwhile, examples of the organic acid salt include carboxylates, sulfonates, phosphonates, and the like. In addition, transition metal complexes with a β-diketone, a β-keto acid ester, or the like may also be utilized.

In particular, in the present invention, in view of the fact that the oxygen absorption performance is exhibited well, it is preferred to use at least one selected from carboxylates, carbonates, acetyl acetonate complexes, oxides, and halides, each containing the aforementioned metal atom; it is more preferred to use at least one selected from octanoates, neodecanoates, naphthenates, stearates, acetates, carbonates, and acetyl acetonate complexes, each containing the aforementioned metal atom; and it is still more preferred to use a cobalt carboxylate such as cobalt octanoate, cobalt naphthenate, cobalt acetate, cobalt stearate, etc.

The aforementioned oxidation reaction accelerator (C) may be used solely or in combination of two or more kinds thereof.

In the case where the oxidation reaction accelerator (C) is one containing a transition metal element, its content is preferably 10 to 1,000 ppm, more preferably 20 to 500 ppm, still more preferably 40 to 300 ppm, and especially preferably 50 to 100 ppm in terms of a transition metal concentration in the packaging body, from the viewpoint of accelerating the oxidation reaction of the polyamide resin (B) to improve the oxygen absorption performance of the packaging body, thereby enhancing the preservability of the contents.

The transition metal concentration in the packaging body may be measured by a known method, for example, ICP emission spectral analysis, ICP mass analysis, X-ray fluorescence analysis, etc. Specifically, the transition metal concentration in the packaging body may be measured by a method described in the Examples.

The aforementioned oxidation reaction accelerator (C) not only accelerates the oxidation reaction of the polyamide resin (B) but also functions as a catalyst for an oxidation reaction of an organic compound having an unsaturated carbon bond or a compound having secondary or tertiary hydrogen in a molecule thereof. For that reason, in order to more improve the preservability of the contents, the packaging body which is used in the present invention may also be compounded with, in addition to aforementioned oxidation reaction accelerator (C), a variety of compounds exemplified by polymers of an unsaturated hydrocarbon such as polybutadiene, polyisoprene, etc., or oligomers thereof, compounds having a xylylenediamine as a skeleton, compounds in which a functional group for improving compatibility between the aforementioned compound and the polyester is added, and the like.

[Additives and the Like]

The resin composition that constitutes the packaging body of the present invention may also be compounded with additives such as an antioxidant, a matting agent, a heat stabilizer, a weather stabilizer, a UV absorber, a nucleating agent, a plasticizer, a flame retardant, an antistatic agent, an anti-coloring agent, a lubricant, a gelation inhibitor, etc., clays such as a sheet silicate, etc., nano fillers, or the like.

The packaging body of the present invention consists of a resin composition containing the polyester resin (A), the polyamide resin (B), and the oxidation reaction accelerator (C) as described above. A total content of the polyester resin (A), the polyamide resin (B), and the oxidation reaction accelerator (C) in the resin composition that constitutes the packaging body is preferably 75 to 100% by mass, more preferably 80 to 100% by mass, and still more preferably 95 to 100% by mass from the viewpoint of bringing the effects of the present invention.

The packaging body of the present invention may be of a single-layered structure composed of the aforementioned resin composition, or it may be one having a multilayered structure in which two or more layers of the layer composed of the aforementioned resin composition are laminated.

A shape of the packaging body is not particularly limited so long as it is able to fill goods therein and hermetically sealing, and examples thereof include a bottle, a cup, a pouch, a bag, and the like. The shape of the packaging body may be properly selected according to the kind of goods as the contents, or the like. From the viewpoint of preserving liquid goods, the shape of the packaging body is preferably a bottle.

[Production Method of Packaging Body]

A method for producing a packaging body is not particularly limited, but an arbitrary method may be adopted. For example, a bottle-shaped packaging body may be obtained by putting a mixture obtained by dry blending the aforementioned polyester resin (A), polyamide resin (B), oxidation reaction accelerator (C), and various additives into an injection molding machine, injecting a resin composition having been melted in the injection molding machine into a mold to produce a preform, and then heating the preform to a stretching temperature to perform blow stretching. Similarly, a bottle-shaped packaging body may be obtained by melt kneading the aforementioned polyester resin (A), polyamide resin (B), oxidation reaction accelerator (C), and various additives in an extruding machine to prepare a resin composition, injecting the resin composition having been melted into a mold from an injection molding machine to produce a preform, and then heating the preform to a stretching temperature to perform blow stretching. In addition, a cup-shaped packaging body may be obtained by a method of injecting a resin composition having been melted into a mold from an injection molding machine to produce a packaging body, or molding a sheet by a molding method, such as vacuum molding, pressure molding, etc.

It is possible to produce the packaging body of the present invention via a variety of methods without relying upon the aforementioned production methods.

A method for producing the aforementioned resin composition is not particularly limited. For example, a desired resin composition may be obtained by melt kneading the polyester resin (A), the polyamide resin (B), the oxidation reaction accelerator (C), and the various additives to be used, if desired in an extruding machine.

For mixing the polyester resin (A), the polyamide resin (B), and the oxidation reaction accelerator (C), a conventionally known method can be adopted. For example, there are exemplified a method of charging the polyester resin (A), the polyamide resin (B), and the oxidation reaction accelerator (C) in a mixing machine such as a tumbler, a mixer, etc., followed by mixing; and the like.

On that occasion, when the oxidation reaction accelerator (C) is a solid or a powder, a method in which in order to prevent the occurrence of classification after mixing, the polyester resin (A) and/or the polyamide resin (B) is attached to a viscous liquid as a spreading agent, and the oxidation reaction accelerator (C) is then added and mixed may also be adopted.

In addition, a method in which the oxidation reaction accelerator (C) is dissolved in an organic solvent, this solution is mixed with the polyester resin (A) and/or the polyamide resin (B), at the same time with or after mixing, the organic solvent is removed by heating, and the resultant is attached to the polyester resin (A) and/or the polyamide resin (B). Furthermore, in the case of performing melt kneading using an extruding machine, the oxidation reaction accelerator (C) may also be added to an extruding machine by using a separate feeder from that of the polyester resin (A) and/or the polyamide resin (B).

In addition, a method in which the polyester resin (A) and the oxidation reaction accelerator (C) are previously melt kneaded to prepare a resin composition, and then melt kneaded with the polyamide resin (B) may also be adopted. Similarly, a method in which the polyester resin (A) or the polyamide resin (B) and the oxidation reaction accelerator (C) are previously melt kneaded to prepare a master batch, and then melt kneaded with the polyester resin (A) and the polyamide resin (B) may also be adopted.

[Physical Properties and the Like of Packaging Body]

The packaging body of the present invention is characterized in that when a thickness of the packaging body is defined as d ($\mu$m), and an average long diameter, an average short diameter, and a volume fraction of dispersed particles of the polyamide resin (B) in the packaging body are defined as L ($\mu$m), W ($\mu$m), and Vf, respectively, the following expression (1A) is satisfied.

$$10 < d \times L \times Vf/2W < 120 \qquad (1A)$$

An upper limit of the value calculated according to the foregoing expression (1A) is less than 120, preferably less than 100, and more preferably less than 50. A lower limit of the value calculated according to the foregoing expression (1A) is a value of more than 10, preferably more than 12, and more preferably more than 15. When the value calculated according to the expression (1A) is 10 or less, a balance between preservability and visibility of the contents tends to be impaired. When the value calculated according to the expression (1A) is 120 or more, a haze value and a YI value of the packaging body tend to become high, and the visibility of the contents is lowered.

In the case where the foregoing expression (1A) is satisfied, in view of the fact that a path length of a gas transmitting through the packaging body such as an oxygen molecule, etc., becomes long as described later, the gas barrier properties of the packaging body itself are enhanced, and hence, the induction period until the oxygen absorption performance of the packaging body does not reply upon the phosphorus content in the polyamide resin (B). For this reason, the polyamide resin (B) having a relatively high phosphorus content (for example, 100 ppm or more) may be used as the raw material of the packaging body. As described above, when the phosphorus atom-containing compound is added at the time of polycondensation of the polyamide resin, a scarcely colored polyamide resin is obtained. Thus, the packaging body of the present invention for which even the polyamide resin (B) having a relatively high phosphorus content is useful has a low YI value and exhibits favorable visibility of the contents.

The expression (1A) is explained.

In general, the gas barrier properties of the packaging body reply upon a speed of a gas transmitting through the packaging body, such as oxygen, etc. Accordingly, when the thickness d of the packaging body is made thick, a transmission path of the gas becomes long, and it takes a time required for the gas to transmit. Thus, the gas barrier properties of the packaging body are enhanced.

As in the present invention, in the case of a packaging body containing a resin composition in which the polyester resin (A) as a main component is blended with the polyamide resin (B), the polyamide resin (B) exists in a state of dispersed particles in the packaging body. Since the polyamide resin (B) has gas barrier properties, the gas existing in an exterior of the packaging body moves toward the interior direction of the packaging body while keeping away from the dispersed particles of the polyamide resin (B) in the packaging body.

Fig. 1 is a diagrammatic view showing a path of an oxygen molecule when the oxygen molecule moves (transmits) from an exterior of a packaging body toward the interior direction. In Fig. 1, 1 is a cross section of the packaging body in the thickness direction; 2 is a dispersed particle of the polyamide resin (B) in the packaging body; and 3 expresses a path of an oxygen molecule transmitting through the packaging body. L1 expresses a long diameter of the dispersed particle 2, and W1 expresses a short diameter of the dispersed particle 2.

In the case where the dispersed particles 2 of the polyamide resin (B) do not exist in the packaging body 1, the path length of the oxygen molecule is equal to the thickness d of the packaging body. Meanwhile, in the case where the dispersed particles 2 exist in the packaging body 1, the oxygen molecule keeps away from the dispersed particles of the polyamide resin (B) as shown in Fig. 1, and hence, the path of the oxygen molecule becomes long.

Here, in the expression (1A), L/2W stands for an aspect ratio of the dispersed particle 2 of the polyamide resin (B) in the packaging body 1. Then, the longer the average long diameter L, the longer the path of the oxygen molecule until it transmits through the packaging body 1. As a result, the gas barrier properties of the packaging body 1 are enhanced. Similarly, when the volume fraction Vf of the dispersed particles 2 in the packaging body 1 increases, the path of the oxygen molecule becomes long, and the gas barrier properties of the packaging body 1 are enhanced. Furthermore, in the case where the volume fraction Vf of the dispersed particles 2 in the packaging body 1 is equal, when the average short diameter W of the dispersed particle 2 is shorter, the average long diameter L can be made long, so that the path of the oxygen molecule becomes long. In addition, the number of the dispersed particles 2 capable of existing in the thickness d of the packaging body (total number of barrier layers) also increases, and hence, the gas barrier properties of the packaging body 1 are enhanced.

That is, it is meant by the expression (1A) that in the case where the dispersed particles 2 exist in the packaging body 1, the path length of a gas transmitting through the packaging body 1, such as an oxygen molecule, etc., is added in proportion to "d × L × Vf/2W" relative to the thickness d of the packaging body 1. In consequence, so long as the value calculated according to the expression (1A) is a value of more than 10, the preservability of the contents becomes favorable.

So long as the value calculated according to the expression (1A) is less than 120, even when the dispersed particles 2 exist in the packaging body 1, the haze value and the YI value of the packaging body do not become excessively high, so that the visibility of the contents may be kept.

The average long diameter L ($\mu$m) and the average short diameter W ($\mu$m) of the dispersed particles of the polyamide resin (B) may be determined by means of transmission electron microscopy (TEM) observation. For example, the cross section of the packaging body is cut out and subjected to TEM observation, and the dispersed particles of the polyamide resin (B) existing in a portion of 5 $\mu$m in length and 5 $\mu$m in width (area: 25 $\mu$m$^2$) are measured for a long diameter and a short diameter. Average values of the long diameter and the short diameter of all of the dispersed particles are calculated, whereby the average long diameter ($\mu$m) and the average short diameter ($\mu$m) may be determined.

From the viewpoints of gas barrier properties and appearance of the packaging body, the average long diameter L of the dispersed particles of the polyamide resin (B) is preferably 0.05 to 5 $\mu$m, more preferably 0.1 to 2 $\mu$m, and still more preferably 0.2 to 1.5 $\mu$m. From the viewpoint of gas barrier properties of the packaging body, the average short diameter W is preferably 0.01 to 0.5 $\mu$m, more preferably 0.02 to 0.2 $\mu$m, and still more preferably 0.04 to 0.15 $\mu$m.

Specifically, each of the average long diameter L ($\mu$m) and the average short diameter W ($\mu$m) may be measured by a method described in the Examples.

The average long diameter L and the average short diameter W of the dispersed particles of the polyamide resin (B) may be regulated by a formulation or melt viscosity of the resin composition to be used for the packaging body, or a production condition or the like of the packaging body. For example, in the case where the packaging body is a bottle, the average long diameter L and the average short diameter W of the dispersed particles may be regulated by properly selecting a formulation and a melt viscosity of the resin composition on injecting the resin composition containing the polyester resin (A), the polyamide resin (B), and the oxidation reaction accelerator (C) to produce a preform, as described above, or a production condition on producing a preform, a stretching condition on performing blow stretching by using the preform, or both of the foregoing conditions.

The volume fraction Vf of the dispersed particles of the polyamide resin (B) refers to a volume portion occupied by the dispersed particles of the polyamide resin (B) in the resin composition in the case where a volume of the whole of the resin composition that constitutes the packaging body is defined as 1. The volume fraction Vf may be calculated from mass and density values of each of the components included in the resin composition, such as the polyester resin (A), the polyamide resin (B), etc. Specifically, the density of each of the components may be determined by a method described in the Examples.

The oxygen transmission rate after a lapse of 100 hours after preparing of the packaging body is 0.006 [cc/(package · day · 0.21 atm)] or less, more preferably 0.005 [cc/(package · day · 0.21 atm)] or less, still more preferably 0.003 [cc/(package · day · 0.21 atm)] or less, and yet still more preferably 0.001 [cc/(package · day · 0.21 atm)] or less from the viewpoint of preservability of the contents. So long as the oxygen transmission rate after a lapse of 100 hours after preparing of the packaging body is 0.006 [cc/(package · day · 0.21 atm)] or less, the induction period until the oxygen absorption performance of the packaging body is exhibited is short, and the oxidation deterioration of the contents from the beginning of preservation may be suppressed, and thus, excellent preservability is exhibited.

The oxygen transmission rate after a lapse of 100 hours after preparing of the packaging body [cc/(package · day · 21278 Pa (0.21 atm))] is a value measured under a condition at an oxygen partial pressure of 21278 Pa (0.21 atm) and under conditions at an interior humidity of the packaging body of 100% RH, an external humidity of 50% RH, and a temperature of 23°C, and specifically, it may be measured by a method described in the Examples.

The terms "after a lapse of 100 hours after preparing of the packaging body" as referred to herein means a point of time after a lapse of 100 hours in the case where a point of time when the packaging body is molded in a final form is defined as "0 hour after preparing of the packaging body". For example, in the case where the packaging body is in a bottle shape, a point of time after a lapse of 100 hours from a point of time when the packaging body is molded in a shape of bottle to be finally used is defined as "after a lapse of 100 hours after preparing of the packaging body", and even when gone through a preform in molding the bottle, the time of preparing of the preform is not a starting point of "0 hour after preparing of the packaging body".

From the viewpoint of visibility of the contents, a haze value of the packaging body of the present invention is 8% or less, preferably 7.5% or less, and more preferably 6% or less. In the case where the packaging body is in a bottle shape, from visibility of the contents, the haze value of a bottle barrel is 8% or less.

From the viewpoint of visibility of the contents, a YI value of the packaging body is preferably 10 or less, more preferably 8 or less, and still more preferably 7.5 or less. In the case where the packaging body is in a bottle shape, from the viewpoint of visibility of the contents, it is preferred that the YI value of a bottle barrel falls with the foregoing range.

Specifically, each of the haze value and the YI value may be measured by a method described in the Examples.

From the viewpoint of preservability of the contents, a volume of the packaging body of the present invention is preferably 0.1 to 2.0 L, more preferably 0.2 to 1.5 L, and still more preferably 0.3 to 1.0 L. In general, when the volume of the packaging body is large, the oxygen transmission rate per packaging body is increased, and hence, the oxidation deterioration of the contents is liable to be generated, and the preservability tends to be lowered. However, in the present invention, not only the packaging body has the oxygen absorption performance as described above, but also the gas barrier properties of the packaging body itself is high. Thus, even in the case where the volume of the packaging body is large to some extent, the preservability of the contents may be kept.

The thickness d of the packaging body of the present invention may be properly regulated by the shape of the packaging body, the kind of the contents, and the like. However, from the viewpoint of making both preservability and visibility of the contents compatible with each other, the thickness d of the packaging body is in the range of preferably from 200 to 400 $\mu$m, more preferably from 220 to 380 $\mu$m, and still more preferably from 250 to 350 $\mu$m.

A mass of the packaging body of the present invention may be properly regulated by the shape of the packaging body, the kind of the contents, and the like. However, from the viewpoints of mechanical strength as the packaging body and preservability of the contents, the mass of the packaging body is preferably 10 g or more, more preferably 12 g or more, and still more preferably 14 g or more.

(Preservation Method)

Next, a preservation method of the first embodiment is explained.

A method for preserving goods according to a first embodiment of the present invention contains using the aforementioned packaging body of the present invention. The preservation method is not particularly limited, and examples thereof include a method of filling goods subjective to the preservation in the packaging body of the present invention, followed by preserving.

The goods subjective to the preservation are not particularly limited, and examples thereof include beverages, such as milk, dairy products, soft drinks, coffee, teas, alcohol drinks, etc.; liquid seasonings such as sauce, soy sauce, dressing, etc.; prepared foods such as soup, stew, curry, prepared foods for infants, nursing prepared foods, etc.; pasty foods such as jam, mayonnaise, etc.; marine products such as tuna, sea foods, etc.; milk processed products such as cheese, butter, etc.; meat processed products such as meat, salami, sausage, ham, etc.; vegetables such as carrot, potato, etc.; egg; noodles; processed rice products such as rice prior to cooking, cooked boiled rice, rice porridge, etc.; dry foods such as powdered seasonings, powdered coffee, powdered milk for infants, powdered diet foods, dry vegetables, rice cracker, etc.; chemical products such as pesticides, insecticides, etc.; pharmaceutical products; cosmetics; pet foods; miscellaneous goods such as shampoo, conditioner, detergent, etc.; semiconductor integrated circuits and electronic devices; and the like. In particular, the preservation method of the present invention may be suitably adopted for preservation of goods such as foods, beverages, and pharmaceutical products, etc.

In addition, the packaging body or the contents may be subjected to sterilization in a form suited for goods subjective to the contents before or after filling such goods. Examples of the sterilization method include heat sterilization such as hot water treatment at 100°C or lower, pressurized hot water treatment at 100°C or higher, ultra-high-temperature heat treatment at 130°C or higher, etc.; electromagnetic sterilization with ultraviolet rays, microwaves, gamma rays, etc.; gas treatment with ethylene oxide, etc.; chemical sterilization with hydrogen peroxide, hypochlorous acid, etc.; and the like.

A disclosed further method for preserving goods is a method of filling goods in a packaging body containing a polyester resin (A), a polyamide resin (B), and an oxidation reaction accelerator (C), followed by preserving, wherein a content of the polyamide resin (B) in the packaging body is 2.0 to 3.5% by mass, and when an oxygen transmission rate of the packaging body after a lapse of 100 hours after preparing of the packaging body is defined as X [cc/(package · day · 21278 Pa (0.21 atm))], a volume of the packaging body is defined as V [L], and a mass of the packaging body is defined as M [g], the following expression (1B) is satisfied.

$$X/\{2.5 \times V^2/(M \cdot 8)\} < 0.3 \qquad (1B)$$

The term "[cc/(package · day · 21278 Pa (0.21 atm))]" is the same as that described above and is a unit expressing a quantity of oxygen transmitting through one packaging body per day under a condition at an oxygen partial pressure of 21278 Pa (0.21 atm).

The packaging body which is used for the disclosed further preservation method is hereunder explained in detail.

The packaging body which is used for the disclosed further preservation method contains the polyester resin (A), the polyamide resin (B), and the oxidation reaction accelerator (C). The polyester resin (A), the polyamide resin (B), the oxidation reaction accelerator (C), and preferred embodiments thereof are the same as those described above, except that the content of the polyamide resin (B) in the packaging body of the present invention as described above.

The content of the polyamide resin (B) in the packaging body which is used for the disclosed further preservation method
is 2.0 to 3.5% by mass, preferably 2.0 to 3.0% by mass, and more preferably 2.2 to 2.8% by mass. When the content of the polyamide resin (B) in the packaging body is less than 2.0% by mass, the induction period until the oxidation absorption performance is exhibited becomes long, an effect for suppressing the oxidation deterioration of the contents from the beginning of preservation is not obtained. When the content of the polyamide resin (B) in the packaging body is more than 3.5% by mass, the haze value of the packaging body increases, and the YI value tends to become high, too, so that the visibility of the contents is lowered.

So long as the content of the polyamide resin (B) in the packaging body falls within the range of 2.0 to 3.5% by mass, the induction period until the oxygen absorption performance is exhibited does not rely upon the phosphorus content in the polyamide resin (B). For this reason, the polyamide resin (B) having a relatively high phosphorus content (for example, 100 ppm or more) may be used. In addition, the suppression of oxidation deterioration of the contents from the beginning of preservation is obtained, and an effect for making it possible to make compatible with the visibility of the contents is also brought.

The packaging body which is used for the disclosed further preservation method contains the aforementioned polyester resin (A), polyamide resin (B), and oxidation reaction accelerator (C), and examples thereof include a packaging body containing a resin composition containing the aforementioned (A) to (C).

Preferably, a total content of the polyester resin (A), the polyamide resin (B), and the oxidation reaction accelerator (C) in the resin composition that constitutes the packaging body is preferably 75 to 100% by mass, more preferably 80 to 100% by mass, and still more preferably 95 to 100% by mass. The packaging body which is used for the disclosed further preservation method may be of a single-layered structure composed of the aforementioned resin composition; it may be a laminate in which other thermoplastic resin layer (for example, a polyester resin layer or an adhesive resin layer) is laminated on at least one layer composed of the aforementioned resin composition; or it may be one having a multilayered structure in which two or more layers of the layer composed of the aforementioned resin composition are laminated.

A shape of the packaging body is not particularly limited so long as it is able to fill goods therein, followed by hermetically sealing, and examples thereof include a bottle, a cup, a pouch, a bag, and the like. The shape of the packaging body may be properly selected according to the kind of goods as the contents, or the like; however, the shape of the packaging body is preferably a bottle.

A method for producing the packaging body which is used for the disclosed further preservation method
is not particularly limited, but an arbitrary method may be adopted. For example, a bottle-shaped packaging body may be obtained by putting a mixture obtained by dry blending the aforementioned polyester resin (A), polyamide resin (B), oxidation reaction accelerator (C), and various additives into an injection molding machine, injecting a resin composition having been melted in the injection molding machine into a mold to produce a preform, and then heating the preform to a stretching temperature to perform blow stretching. Similarly, a bottle-shaped packaging body may be obtained by melt kneading the aforementioned polyester resin (A), polyamide resin (B), oxidation reaction accelerator (C), and various additives in an extruding machine to prepare a resin composition, injecting the resin composition having been melted into a mold from an injection molding machine to produce a preform, and then heating the preform to a stretching temperature to perform blow stretching. In addition, a cup-shaped packaging body may be obtained by a method of injecting a resin composition having been melted into a mold from an injection molding machine to produce a packaging body, or molding a sheet by a molding method, such as vacuum molding, pressure molding, etc.

It is possible to produce the packaging body which is used for the disclosed further preservation method
via a variety of methods without relying upon the aforementioned production methods.

A method for producing the aforementioned resin composition is not particularly limited. For example, a desired resin composition may be obtained by melt kneading the polyester resin (A), the polyamide resin (B), the oxidation reaction accelerator (C), and the various additives to be used, if desired in an extruding machine.

For mixing the polyester resin (A), the polyamide resin (B), and the oxidation reaction accelerator (C), a conventionally known method may be adopted. For example, there are exemplified a method of charging the polyester resin (A), the polyamide resin (B), and the oxidation reaction accelerator (C) in a mixing machine such as a tumbler, a mixer, etc., followed by mixing; and the like.

On that occasion, when the oxidation reaction accelerator (C) is a solid or a powder, a method in which in order to prevent the occurrence of classification after mixing, the polyester resin (A) and/or the polyamide resin (B) is attached to a viscous liquid as a spreading agent, and the oxidation reaction accelerator (C) is then added and mixed may also be adopted.

In addition, a method in which the oxidation reaction accelerator (C) is dissolved in an organic solvent, this solution is mixed with the polyester resin (A) and/or the polyamide resin (B), at the same time with or after mixing, the organic solvent is removed by heating, and the resultant is attached to the polyester resin (A) and/or the polyamide resin (B). Furthermore, in the case of performing melt kneading using an extruding machine, the oxidation reaction accelerator (C) may also be added to an extruding machine by using a separate feeder from that of the polyester resin (A) and/or the polyamide resin (B).

In addition, a method in which the polyester resin (A) and the oxidation reaction accelerator (C) are previously melt kneaded to prepare a resin composition, and this is then melt kneaded with the polyamide resin (B) may also be adopted. Similarly, a method in which the polyester resin (A) or the polyamide resin (B) and the oxidation reaction accelerator (C) are previously melt kneaded to prepare a master batch, and this is then melt kneaded with the polyester resin (A) and the polyamide resin (B) may also be adopted.

[Physical Properties and the Like of Packaging Body]

The packaging body which is used for the disclosed further preservation method is characterized in that when an oxygen transmission rate of the packaging body after a lapse of 100 hours after preparing of the packaging body is defined as X [cc/(package · day · 21278 Pa (0.21 atm))], a volume of the packaging body is defined as V [L], and a mass of the packaging body is defined as M [g], the following expression (1B) is satisfied. As a result, the disclosed further preservation method can suppress the oxidation deterioration of the contents from the beginning of preservation, and the preservability is favorable.

$$X/\{2.5 \times V^2/(M \cdot 8)\} < 0.3 \qquad (1B)$$

and X is 0.006 or less.

The "$X/\{2.5 \times V^2/(M \cdot 8)\}$" in the expression (1B) is explained.

An oxygen transmission quantity of the packaging body is determined by a surface area and an average thickness of a portion through which oxygen transmits. For example, in the case where the packaging body is a bottle, the "portion through which oxygen transmits" refers to a barrel excluding a mouth stopper part and a bottom part of the bottle, and the surface area and the average thickness of the barrel influence the oxygen transmission quantity. Then, $(M \cdot 8)$ in the expression (1B) is corresponding to a mass of the bottle barrel, resulting from subtracting masses corresponding to the mouth stopper part and the bottom part of the bottle from the mass M of the bottle.

Here, in the case where the value of (M - 8) is fixed, when the bottle volume V is doubled, the average thickness of the barrel halves, and the surface area of the barrel is doubled. In consequence, the oxygen transmission rate X of the bottle is proportional to a square of the bottle volume V.

Meanwhile, in the case where the bottle volume V is fixed, when the mass (M - 8) of the bottle barrel increases, the average thickness of the barrel increases, and the value of the oxygen transmission rate X becomes low. In consequence, the oxygen transmission rate X of the bottle is inversely proportional to the mass (M - 8) of the bottle barrel. The coefficient "2.5" is a correction coefficient set such that in the case of preparing a packaging body by using only the polyester resin (A), the value of the expression (1B) is 1.0.

That is, so long as the value resulting from dividing the oxygen transmission rate X by $\{2.5 \times V^2/(M - 8)\}$ is less than a fixed value (less than 0.3), the expression (1B) expresses that the oxidation deterioration of the contents from the beginning of preservation may be suppressed, and the preservability is favorable.

The value calculated according to the foregoing expression (1B) is less than 0.3, preferably less than 0.2, more preferably less than 0.15, still more preferably less than 0.1, and yet still more preferably less than 0.05. When the value calculated according to the expression (1B) is 0.3 or more, the induction period until the oxygen absorption performance of the packaging body is exhibited is long, and in particular, the contents cause conspicuous oxidation deterioration at the beginning of preservation, so that the preservability is lowered.

From the standpoint of preservability of the contents, the volume V of the packaging body which is used for the disclosed further preservation method is preferably 0.1 to 2.0 dm$^3$, more preferably 0.2 to 1.5 dm$^3$, and still more preferably 0.3 to 1.0 dm$^3$.

In general, when the volume of the packaging body is large, the oxygen transmission rate per packaging body is increased, and hence, the oxidation deterioration of the contents is liable to be generated, and the preservability tends to be lowered. However, in the present disclosure, the packaging body has the oxygen absorption performance as described above, and hence, even in the case where the volume of the packaging body is large to some extent, the preservability of the contents may be kept.

The thickness of the packaging body which is used for the disclosed further preservation method may be properly regulated by the shape of the packaging body, the kind of the contents, and the like. However, from the viewpoint of making both preservability and visibility of the contents compatible with each other, the thickness of the packaging body is in the range of preferably from 0.10 to 1.00 mm, more preferably from 0.15 to 0.70 mm, and still more preferably from 0.20 to 0.50 mm.

The mass M of the packaging body which is used for the disclosed further preservation method may be properly regulated by the shape of the packaging body, the kind of the contents, and the like. However, from the viewpoints of mechanical strength as the packaging body and preservability of the contents, the mass M of the packaging body is preferably 10 g or more, more preferably 12 g or more, and still more preferably 14 g or more.

The oxygen transmission rate X of the packaging body after a lapse of 100 hours after preparing of the packaging body is

0.006 [cc/(package · day · 21278 Pa (0.21 atm))] or less, still more preferably

0.005 [cc/(package · day · 21278 Pa (0.21 atm))] or less, yet still more preferably

0.003 [cc/(package · day · 21278 Pa (0.21 atm))] or less, and even yet still more preferably

0.001 [cc/(package · day · 21278 Pa (0.21 atm))] or less from the viewpoint of preservability of the contents. So long as the oxygen transmission rate of the packaging body after a lapse of 100 hours after preparing of the packaging body is the foregoing value or less, the preservability of the contents is favorable.

The oxygen transmission rate X of the packaging body after a lapse of 100 hours after preparing of the packaging body [cc/(package · day · 21278 Pa (0.21 atm))] is a value measured under a condition at an oxygen partial pressure of 21278 Pa (0.21 atm) and

under conditions at an interior humidity of the packaging body of 100% RH, an external humidity of 50% RH, and a temperature of 23°C, and specifically, it may be measured by a method described in the Examples.

From the viewpoint of visibility of the contents, a haze value of the packaging body which is used for the disclosed further preservation method is 8% or less, preferably 6% or less, and more preferably 5% or less. From the same viewpoint, a YI value of the packaging body is preferably 10 or less, more preferably 8 or less, and still more preferably 7.5 or less. Specifically, each of the haze value and the YI value may be measured by a method described in the Examples. In the case where the packaging body is in a bottle shape, from the viewpoint of visibility of the contents, it is preferred that the haze value and the YI value of a bottle barrel fall within the foregoing ranges.

In the disclosed further preservation method,

goods are filled in the aforementioned packaging body, followed by preserving. The goods subjective to the preservation are not particularly limited, and examples thereof include the same goods as those exemplified in the preservation method of the first embodiment as described above. In particular, foods, beverages, and pharmaceutical products, and the like may be suitably used.

In addition, the packaging body or the contents may be subjected to sterilization in a form suited for goods subjective to the contents before or after filling such goods. Examples of the sterilization method include the same methods as those exemplified in the preservation method of the first embodiment as described above.

[Examples]

The present invention is hereunder explained in more detail on the basis of Examples, but it should not be construed that the present invention is limited to these Examples. Materials and packaging bodies (bottles) used in Examples and Comparative Examples were analyzed and evaluated by the following methods.

(1) Relative Viscosity of Polyamide Resin (B)

0.2 g of a polyamide resin (B) was accurately weighed and then dissolved in 20 mL of 96% by mass sulfuric acid at 20 to 30°C while stirring. After being completely dissolved, 5 mL of the solution was rapidly taken into a Cannon-Fenske viscometer, allowed to stand in a thermostat at 25°C for 10 minutes, and then measured for a fall time (t). In addition, a fall time ($t_0$) of the 96% by mass sulfuric acid itself was similarly measured. A relative viscosity was calculated from t and to according to the following expression.

$$\text{Relative viscosity} = t/t_0$$

(2) Number Average Molecular Weight of Polyamide Resin (B)

First of all, a terminal amino group concentration and a terminal carboxyl group concentration of a polyamide resin (B) were measured by the following methods.

(a) Terminal Amino Group Concentration ([NH$_2$] $\mu$eq/g)

0.5 g of a polyamide resin (B) was accurately weighed and then dissolved in 30 mL of a solution of phenol/ethanol (4/1 by volume) while stirring. After the polyamide resin was completely dissolved, the solution was subjected to neutralization titration with N/100 hydrochloric acid, thereby determining its terminal amino group concentration.

(b) Terminal Carboxyl Group Concentration ([COOH] $\mu$eq/g)

0.5 g of a polyamide resin (B) was accurately weighed, and the polyamide was dissolved in 30 mL of benzyl alcohol in a nitrogen gas stream at 160 to 180°C while stirring. After the polyamide resin (B) was completely dissolved, the solution was cooled to 80°C in a nitrogen gas stream, 10 mL of methanol was added thereto while stirring, and the resultant was subjected to neutralization titration with an N/100 sodium hydroxide aqueous solution, thereby determining its terminal carboxyl group concentration.

Subsequently, a number average molecular weight of the polyamide resin (B) was determined from quantitative values of the terminal amino group concentration and the terminal carboxyl group concentration according to the following expression.

$$\text{Number average molecular weight} = 2 \times 1{,}000{,}000/([\text{NH}_2] + [\text{COOH}])$$

[NH$_2$]: Terminal amino group concentration ($\mu$eq/g)
[COOH]: Terminal carboxyl group concentration ($\mu$eq/g)

(3) Phosphorus Atom Concentration in Polyamide Resin (B)

As for the measurement of a phosphorus atom concentration in a polyamide resin (B), after the polyamide resin (B) was subjected to wet decomposition with concentrated sulfuric acid, the resultant was quantitated at a wavelength of 213.618 nm by using a X-ray fluorescence spectrometer (trade name: ZSX primus, manufactured by Rigaku Corporation).

(4) Haze

As for a haze of a bottle barrel prepared in each of the Examples and Comparative Examples, the bottle barrel was cut out in a size of 5 cm $\times$ 5 cm and measured with a colormeter/turbidity meter (trade name: COH-400, manufactured by Nippon Denshoku Industries Co., Ltd.) in conformity with JIS K7105. It is meant that when the haze is 8% or less, the visibility of the contents is favorable.

(5) YI value

As for a YI value of a bottle barrel prepared in each of the Examples and Comparative Examples, the bottle barrel was cut out in a size of 5 cm $\times$ 5 cm and measured with a colormeter/turbidity meter (trade name: COH-400, manufactured by Nippon Denshoku Industries Co., Ltd.) in conformity with JIS K7373. When the YI value is 10 or less, it is preferred in less coloration and the visibility of the contents.

(6) Oxygen Transmission Rate

An oxygen transmission rate measuring apparatus (trade name: OX-TRAN 2/61, manufactured by MOCON) was used. As for the oxygen transmission rate after a lapse of 100 hours after preparing of a bottle [cc/(package · day · 21278 Pa (0.21 atm))] , 100 mL of water was filled in the prepared bottle having a volume of 500 cm$^3$, nitrogen of 101325 Pa (1 atm) was passed at a rate of 20 cm$^3$/min through an interior of the bottle under a condition at an oxygen partial pressure of 21278 Pa (0.21 atm) and under conditions at an interior humidity of the bottle of 100% RH, an external humidity of 50% RH, and a temperature of 23°C, and oxygen contained in the nitrogen after passing through the bottle interior was detected with a coulometric sensor, thereby measuring the oxygen transmission rate.

(7) Thickness d of Bottle Barrel

A thickness d of a bottle barrel prepared in each of the Examples and Comparative Examples was measured by the following way.

As for the thickness at a position of 70 mm from a bottle bottom part, thicknesses of four directions (0°, 90°, 180°, and 270°) were measured using a magnetic thickness meter (trade name: MAGNA-MIKE 8500, manufactured by Olympus Corporation), and an average value thereof was defined as a thickness d of the bottle barrel. However, the thickness of this position is substantially free from unevenness among the bottles, and therefore, the thickness of all of the bottles was defined as 300 $\mu$m.

(8) Dispersed Particle Diameter of Polyamide Resin (B)

An average long diameter L ($\mu$m) and an average short diameter W ($\mu$m) of dispersed particles of a polyamide resin (B) in a bottle prepared in each of the Examples and Comparative Examples were measured by the following way.
A barrel of the bottle prepared in each of the Examples and Comparative Examples was cut out and embedded in an epoxy resin such that the thickness direction and MD direction of the bottle were a cross section. Subsequently, an ultrathin piece for observation having a thickness of about 0.1 $\mu$m was cut out from the embedded sample by using an ultramicrotome (trade name: CR-X Power Tome XL, manufactured by Boeckeler Instruments). The prepared ultrathin piece was dyed with ruthenium chloride and then subjected to electron microscope observation on a copper mesh. A dispersion state was observed due to a shade of the dyed polyamide resin (B) and polyester resin (A).
Subsequently, a long diameter and a short diameter of dispersed particles of the polyamide resin (B) were measured by the following way. First of all, with respect to an arbitrary one dispersed particle of the polyamide resin (B), a tangent a-a' was drawn on each end of the longest portion, and a distance between the tangents was defined as a long diameter L0. Subsequently, perpendiculars were drawn against the long diameter L0, a length of the longest perpendicular among the perpendiculars was measured, and its length was defined as a short diameter W0.
With respect to the average long diameter L ($\mu$m) and the average short diameter W ($\mu$m) of the dispersed particles of the polyamide resin (B), the dispersed particles of the polyamide resin (B) in a portion of 5 $\mu$m in length and 5 $\mu$m in width (area: 25 $\mu m^2$) of the bottle barrel were measured for long diameter and short diameter, and average values of the long diameter and the short diameter of all of the dispersed particles were calculated, thereby defining the average long diameter L ($\mu$m) and the average short diameter W ($\mu$m), respectively.

<Observation Condition>

Electron microscope: Surface observation type electron microscope, S4800, manufactured by Hitachi High-Technologies Corporation
Accelerating voltage: 30 kV
Current: 10 mA
Measuring magnification: 25,000 times
Measuring mode: TEM

In addition, the aforementioned measured values were substituted in the foregoing expression (1A), thereby calculating the value calculated according to the expression (1A).

(9) Density (g/cm$^3$) of Polyester Resin (A) and Polyamide Resin (B)

A single-layered sheet having a thickness of about 1 mm was molded using a sheet molding apparatus including an extruding machine, a T-die, a cooling roll, a drawing machine, and the like. Subsequently, a test piece of 50 mm in length $\times$ 50 mm in width was cut out from the sheet and determined for a true specific gravity (density) with a true specific gravity meter. The density of each of polyester resins (PET1 and PET2) used in the Examples and Comparative Examples was 1.5 (g/cm$^3$), and the density of each of polyamide resins PA1 to PA4 produced in Production Examples 1 to 4 was 1.2 (g/cm$^3$).

(10) Preservation Rate of Vitamin C (L-Ascorbic Acid)

500 mL of a 10% aqueous solution of vitamin C (L-ascorbic acid) was filled from an opening of a bottle, and the bottle was thermally welded with an aluminum foil laminated film, thereby hermetically sealing the opening. After preservation in an environment at 23°C and 50% RH for 10 days, a content liquid was taken out, 10 mL of the content liquid was put into a tall beaker having a volume of 10 mL, and subsequently, 5 mL of a mixed aqueous solution of metaphosphoric acid and acetic acid and 40 mL of distilled water were added. Subsequently, the resultant was titrated with 0.05 mol/L of an iodine solution as a titration liquid by using a potential-difference titration device by the inflection point detection method, and the preservation rate of vitamin C was determined from the results. It is meant that when the preservation rate of vitamin C is high, the effect for suppressing oxidation deterioration of the contents is excellent, and when the preservation rate of vitamin C is 90% or more, the preservability is favorable.

In Examples 1-1 to 1-12 and 2-1 to 2-6 and Comparative Examples 1-1 to 1-3 and 2-1 to 2-7, the following product (PET1) was used as the polyester resin (A) and the oxidation reaction accelerator (C). On the occasion of use, pellets resulting from drying at 150°C for 6 hours by a dehumidification dryer were used.

PET1: Sulfoisophthalic acid-isophthalic acid-modified PET (ethylene terephthalate-isophthalate-sulfoisophthalic acid metal salt copolymer), manufactured by Invista, trade name: "PolyShield 2300K", limiting viscosity: 0.82 dL/g, cobalt metal content: 80 ppm, sulfoisophthalic acid metal salt modification rate: 0.1 mol%, isophthalic acid modification rate: 3.6 mol%

In Comparative Examples 1-4 to 1-8, the following product (PET2) was used as the polyester resin (A). On the occasion of use, pellets resulting from drying at 150°C for 6 hours by a dehumidification dryer were used.

PET2: Isophthalic acid-modified PET copolymer (ethylene terephthalate-isophthalate copolymer), manufactured by Nippon Unipet Co., Ltd., trade name: "BK2180", limiting viscosity: 0.83 dL/g, isophthalic acid modification rate: 1.5 mol%

In PET1 and PET2, all of the sulfoisophthalic acid metal salt modification rate and the isophthalic acid modification rate refer to a modification rate relative to 100 mol% of the dicarboxylic acid used in PET1 or PET2.

(Production Example 1) Production of Polyamide Resin PA1

A 50-liter jacket-equipped reactor provided with a stirrer, a partial condenser, a cooler, a dropping tank, and a nitrogen gas introducing tube was charged with 15.000 kg (102.64 moles) of adipic acid, 13.06 g (0.123 moles) of sodium hypophosphite monohydrate, and 6.88 g (0.084 moles) of sodium acetate and then thoroughly substituted with nitrogen. Furthermore, the temperature was raised to 180°C in a small amount of a nitrogen gas stream, thereby uniformly dissolving the adipic acid. 13.812 kg (101.41 moles) of metaxylylenediamine (manufactured by Mitsubishi Gas Chemical Company, Inc.) was added dropwise over 170 minutes while stirring the inside of the system. Meanwhile, the inner temperature was continuously raised to 245°C. The water formed by polycondensation was removed outside the system through the partial condenser and the cooler.

After completion of the dropwise addition of metaxylylenediamine, the inner temperature was further raised to 260°C; the reaction was continued for one hour; thereafter, the polymer was taken out as a strand from a nozzle in a lower part of the reactor; and after water cooling, the resultant was pelletized to obtain a polymer.

Subsequently, the polymer obtained by the aforementioned operations was put into a 250-liter rotary-type tumbler provided with a heating jacket, a nitrogen gas introducing tube, and a vacuum line, and an operation of evacuating the inside of the system while rotating and then returning to atmospheric pressure with nitrogen having a purity of 99% by volume or more was performed three times. Thereafter, the inside of the system was subjected to temperature rise to 140°C in a nitrogen gas stream. Subsequently, the inside of the system was evacuated, and the temperature was raised to 190°C over 150 minutes, followed by further holding for 80 minutes. Nitrogen was introduced to return the inside of the system to atmospheric pressure, followed by cooling to obtain a polyamide resin (PA1). Physical property values of the resulting polyamide resin PA1 are as follows. A phosphorus atom concentration in PA1 was 137 ppm.

Relative viscosity = 2.21, terminal carboxyl group concentration = 108 $\mu$eq/g, terminal amino group concentration = 5 $\mu$eq/g, number average molecular weight = 17,699

(Production Example 2) Production of Polyamide Resin PA2

A polyamide resin PA2 was obtained in the same manner as that in Production Example 1, except that the addition amount of the sodium hypophosphite monohydrate was changed to 8.65 g (0.082 moles); and that the addition amount of the sodium acetate was changed to 4.55 g (0.055 moles). Physical property values of the resulting polyamide resin PA2 are the same as those in the aforementioned PA1. A phosphorus atom concentration in PA2 was 95 ppm.

(Production Example 3) Production of Polyamide Resin PA3

A polyamide resin PA3 was obtained in the same manner as that in Production Example 1, except that the addition amount of the sodium hypophosphite monohydrate was changed to 4.33 g (0.041 moles); and that the addition amount of the sodium acetate was changed to 2.28 g (0.028 moles). Physical property values of the resulting polyamide resin PA3 are the same as those in the aforementioned PA1. A phosphorus atom concentration in PA3 was 49 ppm.

(Production Example 4) Production of Polyamide Resin PA4

A polyamide resin PA4 was obtained in the same manner as that in Production Example 1, except that the addition amount of the sodium hypophosphite monohydrate was changed to 0.95 g (0.00899 moles); and that the addition amount of the sodium acetate was changed to 0.49 g (0.0060 moles). Physical property values of the resulting polyamide resin PA4 are the same as those in the aforementioned PA1. A phosphorus atom concentration in PA4 was 11 ppm.

(Production Example 5) Production of Polyamide Resin PA5

A polyamide resin PA5 was obtained in the same manner as that in Production Example 1, except that the addition amount of the sodium hypophosphite monohydrate was changed to 14.88 g (0.140 moles); and that the addition amount of the sodium acetate was changed to 7.83 g (0.095 moles). Physical property values of the resulting polyamide resin PA5 are the same as those in the aforementioned PA1. A phosphorus atom concentration in PA5 was 172 ppm.

(Production Example 6) Production of Master Batch 1 (MB1)

The polyamide resin PA1 obtained in Production Example 1 was used as the polyamide resin (B), and cobalt stearate was used as the oxidation reaction accelerator (C). The cobalt stearate was dry blended such that a cobalt metal content was 4,000 ppm relative to the polyamide resin (B) and melt mixed with a twin-screw extruding machine provided with a $\phi$32 mm full-flight screw at a rotation rate of 80 rpm and at 265°C. This was extruded in a strand form, subjected to air cooling, and then pelletized to obtain pellets of a master batch 1 (MB1). A cobalt metal content contained in the resulting MB1 was 4,025 ppm in terms of a cobalt metal concentration.

(Examples 1-1 to 1-12 and Comparative Examples 1-1 to 1-8: Preparing and Evaluation of Packaging Body)

Example 1-1

PET1 containing 80 ppm of a cobalt metal in advance was used as the polyester resin, and PA1 obtained in Production Example 1 was used as the polyamide resin. PET1 was dried at 150°C for 6 hours prior to the use, and thereafter, PET1 and PA1 were added in a mass ratio of PET1/PA1 of 97.5/2.5 and mixed at room temperature for 10 minutes, thereby preparing pellets.
Subsequently, the aforementioned mixed pellets were injection molded under the following condition by using an injection molding machine (model: SE-130DU-CI, manufactured by Sumitomo Heavy Industries, Ltd., two-shot molding), thereby obtaining a single-layered preform (total length: 95 mm, outer diameter: 22 mm, wall thickness: 3.0 mm).

<Single-Layered Preform Molding Condition>

Injection cylinder temperature: 280°C
Mold resin flow path temperature: 280°C
Mold cooling water temperature: 15°C

Furthermore, the resulting single-layered preform was cooled and then subjected to twin-screw stretching blow molding under the following condition by using a blow molding apparatus (model: EFB1000ET, manufactured by Frontier, Inc.), thereby obtaining a single-layered bottle (height: 223 mm, barrel diameter: 65 mm, volume: 500 mL, wall thickness: 300 $\mu$m, mass: 25 g).

(Twin-Screw Stretching Blow Molding Condition)

Preform heating temperature: 103°C
Pressure for stretching rod: 0.5 MPa
Primary blow pressure: 0.5 MPa
Secondary blow pressure: 2.5 MPa
Primary blow delay time: 0.32 sec
Primary blow time: 0.28 sec

Secondary blow time: 2.0 sec
Blow exhaust time: 0.6 sec
Mold temperature: 30°C

The thus-obtained single-layered bottle was subjected to the evaluations as described above. The results are shown in Table 1.

Examples 1-2 to 1-5

Single-layered bottles were prepared and evaluated in the same manners as those in Example 1-1, except that the kinds and compounding amounts of the polyester resin (A) and the polyamide resin (B) were changed as shown in Table 1. The results are shown in Table 1.

Example 1-6

PET1 was used as the polyester resin (A), and PA1 was used as the polyamide resin (B). In addition, PET1 and PA1 were added in a mass ratio of PET1/PA1 of 98.0/2.0 and mixed at room temperature for 10 minutes, thereby preparing pellets.

Using the resulting pellet mixture, a single-layered bottle was prepared and evaluated in the same manners as those in Example 1-1, except that the single-layered preform molding condition was changed as shown below. The results are shown in Table 1.

<Single-Layered Preform Molding Condition>

Injection cylinder temperature: 290°C
Mold resin flow path temperature: 290°C
Mold cooling water temperature: 15°C

Example 1-7

A single-layered bottle was prepared and evaluated in the same manners as those in Example 1-6, except that the single-layered preform molding condition was changed as shown below. The results are shown in Table 1.

<Single-Layered Preform Molding Condition>

Injection cylinder temperature: 298°C
Mold resin flow path temperature: 298°C
Mold cooling water temperature: 15°C

Example 1-8

A single-layered bottle was prepared and evaluated in the same manners as those in Example 1-6, except that the single-layered preform molding condition was changed as shown below. The results are shown in Table 1.

<Single-Layered Preform Molding Condition>

Injection cylinder temperature: 305°C
Mold resin flow path temperature: 305°C
Mold cooling water temperature: 15°C

Example 1-9

PET1 was used as the polyester resin (A), and PA1 was used as the polyamide resin (B). In addition, PET1 and PA1 were added in a mass ratio of PET1/PA1 of 96.6/3.4 and mixed at room temperature for 10 minutes, thereby preparing pellets.

A single-layered bottle was prepared and evaluated in the same manners as those in Example 1-1, except that the single-layered preform molding condition was changed as shown below. The results are shown in Table 1.

<Single-Layered Preform Molding Condition>

Injection cylinder temperature: 285°C
Mold resin flow path temperature: 285°C
Mold cooling water temperature: 15°C

Example 1-10

PET1 was used as the polyester resin (A), and PA1 was used as the polyamide resin (B). In addition, PET1 and PA1 were added in a mass ratio of PET1/PA1 of 96.5/3.5 and mixed at room temperature for 10 minutes, thereby preparing pellets.

Using the resulting pellet mixture, a single-layered bottle was prepared and evaluated in the same manners as those in Example 1-1, except that the single-layered preform molding condition was changed as shown below. The results are shown in Table 1.

<Single-Layered Preform Molding Condition>

Injection cylinder temperature: 293°C
Mold resin flow path temperature: 293°C
Mold cooling water temperature: 15°C

Example 1-11

A single-layered bottle was prepared and evaluated in the same manners as those in Example 1-10, except that the single-layered preform molding condition was changed as shown below. The results are shown in Table 1.

<Single-Layered Preform Molding Condition>

Injection cylinder temperature: 298°C
Mold resin flow path temperature: 298°C
Mold cooling water temperature: 15°C

Example 1-12

A single-layered bottle was prepared and evaluated in the same manners as those in Example 1-10, except that the single-layered preform molding condition was changed as shown below. The results are shown in Table 1.

<Single-Layered Preform Molding Condition>

Injection cylinder temperature: 265°C
Mold resin flow path temperature: 265°C
Mold cooling water temperature: 15°C

[Table 1]

| | | | | Example | | | | | | | | | | | |
|---|---|---|---|---|---|---|---|---|---|---|---|---|---|---|---|
| | | | | 1-1 | 1-2 | 1-3 | 1-4 | 1-5 | 1-6 | 1-7 | 1-8 | 1-9 | 1-10 | 1-11 | 1-12 |
| Resin composition | Polyester resin (A) | Kind | - | PET1 | PET1 | PET1 | PET1 | PET1 | PET1 | PET1 | PET1 | PET1 | PET1 | PET1 | PET1 |
| | | Content | % by mass | 97.5 | 97.4 | 97.6 | 97.6 | 97.9 | 98.0 | 98.0 | 98.0 | 96.6 | 96.5 | 96.5 | 96.5 |
| | Polyamide resin (B) | Kind | - | PA1 | PA1 | PA2 | PA4 | PA3 | PA1 | PA1 | PA1 | PA1 | PA1 | PA1 | PA1 |
| | | Phosphorus atom concentration | ppm | 137 | 137 | 95 | 11 | 49 | 137 | 137 | 137 | 137 | 137 | 137 | 137 |
| | | Content | % by mass | 2.5 | 2.6 | 2.4 | 2.4 | 2.1 | 2.0 | 2.0 | 2.0 | 3.4 | 3.5 | 3.5 | 3.5 |
| | Oxidation reaction accelerator (C) | Kind of transition metal | - | Co | Co | Co | Co | Co | Co | Co | Co | Co | Co | Co | Co |
| | | Transition metal concentration | ppm | 78 | 78 | 78 | 78 | 78 | 74 | 74 | 74 | 77 | 77 | 77 | 77 |
| Bottle | Single-layered preform molding condition | Injection cylinder temperature | °C | 280 | 280 | 280 | 280 | 280 | 290 | 298 | 305 | 285 | 293 | 298 | 265 |
| | | Mold resin flow path temperature | °C | 280 | 280 | 280 | 280 | 280 | 290 | 298 | 305 | 285 | 293 | 298 | 265 |
| | Bottle volume | | mL | 500 | 500 | 500 | 500 | 500 | 500 | 500 | 305 | 500 | 500 | 500 | 500 |
| | Bottle mass | | g | 25 | 25 | 25 | 25 | 25 | 25 | 25 | 25 | 25 | 25 | 25 | 25 |

| | | | Example | | | | | | | | | | | |
|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 |
| Evaluation results | d: Bottle barrel thickness | μm | 300 | 300 | 300 | 300 | 300 | 300 | 300 | 300 | 300 | 300 | 300 | 300 |
| | L: Average long diameter of dispersed particles of polyamide resin (B) | μm | 0.27 | 0.40 | 0.60 | 0.27 | 0.29 | 0.40 | 0.60 | 1.30 | 0.27 | 0.40 | 0.60 | 1.30 |
| | W: Average short diameter of dispersed particles of polyamide resin (B) | μm | 0.08 | 0.08 | 0.08 | 0.08 | 0.07 | 0.08 | 0.08 | 0.08 | 0.08 | 0.08 | 0.08 | 0.08 |
| | Vf: Volume fraction of polyamide resin (B) | - | 0.031 | 0.032 | 0.030 | 0.030 | 0.026 | 0.025 | 0.025 | 0.025 | 0.042 | 0.043 | 0.043 | 0.043 |
| | Value of expression (1A) (d × L × Vf/2W) | - | 15.7 | 24.2 | 33.5 | 15.1 | 16.2 | 18.7 | 28.0 | 60.6 | 21.3 | 32.5 | 48.8 | 105.7 |
| | Oxygen transmission rate after a lapse of 100 hours after preparing of bottle | cc/package · day ·0.21 atm | 0.0009 | 0.0008 | 0.0010 | 0.0010 | 0.0026 | 0.0025 | 0.0024 | 0.0009 | 0.0005 | 0.0005 | 0.0005 | 0.0005 |
| | Haze of bottle barrel | % | 4.5 | 5.6 | 4.6 | 5.1 | 4.3 | 4.3 | 4.2 | 4.1 | 7.5 | 7.5 | 7.5 | 7.5 |
| | YI of bottle barrel | - | 7.5 | 7.9 | 6.7 | 8.1 | 6.8 | 6.5 | 6.3 | 6.2 | 9.6 | 9.6 | 9.6 | 9.6 |
| | Preservation rate of vitamin C | % | 96 | 97 | 96 | 96 | 96 | 94 | 94 | 96 | 97 | 96 | 97 | 97 |

EP 3 009 375 B1

Comparative Example 1-1

PET1 was used as the polyester resin (A), and PA4 was used as the polyamide resin (B). In addition, PET1 and PA4 were added in a mass ratio of PET1/PA4 of 95.0/5.0 and mixed at room temperature for 10 minutes, thereby preparing pellets.

Using the resulting pellet mixture, a single-layered bottle was prepared and evaluated in the same manners as those in Example 1-1, except that the single-layered preform molding condition was changed as shown below. The results are shown in Table 2.

<Single-Layered Preform Molding Condition>

Injection cylinder temperature: 280°C
Mold resin flow path temperature: 280°C
Mold cooling water temperature: 15°C

Comparative Example 1-2

A single-layered bottle was prepared and evaluated in the same manners as those in Comparative Example 1-1, except that the single-layered preform molding condition was changed as shown below. The results are shown in Table 2.

<Single-Layered Preform Molding Condition>

Injection cylinder temperature: 270°C
Mold resin flow path temperature: 270°C
Mold cooling water temperature: 15°C

Comparative Example 1-3

PET1 was used as the polyester resin (A), and PA4 was used as the polyamide resin (B). In addition, PET1 and PA4 were added in a mass ratio of PET1/PA4 of 98.2/1.8 and mixed at room temperature for 10 minutes, thereby preparing pellets.

Using the resulting pellet mixture, a single-layered bottle was prepared and evaluated in the same manners as those in Example 1-1, except that the single-layered preform molding condition was changed as shown below. The results are shown in Table 2.

<Single-Layered Preform Molding Condition>

Injection cylinder temperature: 280°C
Mold resin flow path temperature: 280°C
Mold cooling water temperature: 15°C

Comparative Example 1-4

PET 2 which is not contains a cobalt metal was used as the polyester resin (A), PA1 obtained in Production Example 1 was used as the polyamide resin (B), and the master batch 1 (MB1) obtained in Production Example 6 was used as the master batch containing an oxidation reaction accelerator. PET2, PA1, and MB1 were added in a mass ratio of PET2/PA1/MB1 of 97.0/1.0/2.0 and mixed at room temperature for 10 minutes, thereby preparing pellets.

Using the resulting pellet mixture, a single-layered bottle was prepared and evaluated in the same manners as those in Example 1-1, except that the single-layered preform molding condition was changed as shown below. The results are shown in Table 2.

<Single-Layered Preform Molding Condition>

Injection cylinder temperature: 280°C
Mold resin flow path temperature: 280°C
Mold cooling water temperature: 15°C

Comparative Example 1-5

A single-layered bottle was prepared and evaluated in the same manners as those in Comparative Example 1-4, except that the single-layered preform molding condition was changed as shown below. The results are shown in Table 2.

<Single-Layered Preform Molding Condition>

Injection cylinder temperature: 290°C
Mold resin flow path temperature: 290°C
Mold cooling water temperature: 15°C

Comparative Example 1-6

A single-layered bottle was prepared and evaluated in the same manners as those in Comparative Example 1-4, except that the single-layered preform molding condition was changed as shown below. The results are shown in Table 2.

<Single-Layered Preform Molding Condition>

Injection cylinder temperature: 300°C
Mold resin flow path temperature: 300°C
Mold cooling water temperature: 15°C

Comparative Example 1-7

PET2 and MB1 were added in a mass ratio of PET2/MB1 of 98.3/1.7 and mixed at room temperature for 10 minutes, thereby preparing pellets.
Subsequently, a single-layered bottle was prepared and evaluated in the same manners as those in Comparative Example 1-4. The results are shown in Table 2.

Comparative Example 1-8

PET2, PA1, and MB1 were added in a mass ratio of PET2/PA1/MB1 of 95.0/3.0/2.0 and mixed at room temperature for 10 minutes, thereby preparing pellets.
Subsequently, a single-layered bottle was prepared and evaluated in the same manners as those in Comparative Example 1-4. The results are shown in Table 2.

[Table 2]

| | | | | Comparative Example | | | | | | | |
|---|---|---|---|---|---|---|---|---|---|---|---|
| | | | | 1-1 | 1-2 | 1-3 | 1-4 | 1-5 | 1-6 | 1-7 | 1-8 |
| Resin composition | Polyester resin (A) | Kind | - | PET1 | PET1 | PET1 | PET2 | PET2 | PET2 | PET2 | PET2 |
| | | Content | % by mass | 95.0 | 95.0 | 98.2 | 97.0 | 97.0 | 97.0 | 98.3 | 95.0 |
| | Polyamide resin (B) | Kind | - | PA4 | PA4 | PA4 | PA1 | PA1 | PA1 | PA1 | PA1 |
| | | Phosphorus atom concentration | ppm | 11 | 11 | 11 | 137 | 137 | 137 | 137 | 137 |
| | | Content | % by mass | 5.0 | 5.0 | 1.8 | 3.0 | 3.0 | 3.0 | 1.7 | 5.0 |
| | Oxidation reaction accelerator (C) | Kind of transition metal | - | Co | Co | Co | Co | Co | Co | Co | Co |
| | | Transition metal concentration | ppm | 76 | 76 | 79 | 81 | 81 | 81 | 68 | 81 |
| Bottle | Single-layered preform molding condition | Injection cylinder temperature | °C | 280 | 270 | 280 | 280 | 290 | 300 | 280 | 280 |
| | | Mold resin flow path temperature | °C | 280 | 270 | 280 | 280 | 290 | 300 | 280 | 280 |
| | Bottle volume | | mL | 500 | 500 | 500 | 500 | 500 | 500 | 500 | 500 |
| | Bottle mass | | g | 25 | 25 | 25 | 25 | 25 | 25 | 25 | 25 |

(continued)

| | | | Comparative Example | | | | | | | |
|---|---|---|---|---|---|---|---|---|---|---|
| | | | 1-1 | 1-2 | 1-3 | 1-4 | 1-5 | 1-6 | 1-7 | 1-8 |
| Evaluation results | d: Bottle barrel thickness | μm | 300 | 300 | 300 | 300 | 300 | 300 | 300 | 300 |
| | L: Average long diameter of dispersed particles of polyamide resin (B) | μm | 0.27 | 1.3 | 0.27 | 1 | 1 | 1 | 1 | 1 |
| | W: Average short diameter of dispersed particles of polyamide resin (B) | μm | 0.08 | 0.08 | 0.08 | 1 | 0.5 | 0.3 | 1 | 1 |
| | Vf: Volume fraction of polyamide resin (B) | - | 0.062 | 0.062 | 0.022 | 0.037 | 0.037 | 0.037 | 0.021 | 0.062 |
| | Value of expression (1A) (d × L × Vf/2W) | - | 31.3 | 150.5 | 11.3 | 5.6 | 11.2 | 18.6 | 3.2 | 9.3 |
| | Oxygen transmission rate after a lapse of 100 hours after preparing of bottle | cc/(package · day · 0.21 atm) | 0.0005 | 0.0004 | 0.029 | 0.001 | 0.001 | 0.001 | 0.029 | 0.004 |
| | Haze of bottle barrel | % | 13.2 | 12.1 | 3.8 | 8.5 | 9.1 | 9.3 | 4.5 | 12.7 |
| | YI of bottle barrel | - | 13.6 | 13.4 | 6.6 | 9.3 | 9.2 | 9.2 | 6.7 | 11.3 |
| | Preservation rate of vitamin C | % | 97 | 97 | 88 | 91 | 92 | 92 | 88 | 97 |

As shown in Table 1, in the bottles of Examples 1-1 to 1-12, the haze value of the bottle barrel is 8% or less, and the YI value is also low, and hence, the visibility of the contents is excellent. In addition, the oxygen transmission rate after a lapse of 100 hours after preparing of the bottle is 0.01 [cc/(package day 0.21 atm)] or less, and the induction period until the oxygen absorption capability is exhibited is short. Moreover, it is understood that in view of the fact that the preservation rate of vitamin C is high, the oxidation deterioration of the contents may be suppressed, and the preservability is excellent.

That is, according to the packaging body of the present invention, both preservability and visibility of the contents may be made compatible with each other without relying upon the phosphorus content in the polyamide resin (B) to be used for the packaging body.

(Examples 1-1 to 1-5, Example 2-1, and Comparative Examples 2-1 to 2-7: Preservation Method)

Examples 1-1 to 1-5

With respect to the above-obtained single-layered bottles, the aforementioned evaluations were performed, and the value of the expression (IB) was calculated. The results are shown in Table 3.

Example 2-1 and Comparative Examples 2-1 to 2-7

Single-layered bottles were prepared and evaluated in the same manners as those in Example 1-1, except that the kind and compounding amount of the polyamide resin (B) were changed as shown in Table 3, and the value of the expression (IB) was calculated. The results are shown in Table 3.

[Table 3]

| Formulation of packaging body (bottle) | | | | Example | | | | | | Comparative Example | | | | | | |
|---|---|---|---|---|---|---|---|---|---|---|---|---|---|---|---|---|
| | | | | 1-1 | 1-2 | 1-3 | 1-4 | 1-5 | 2-1 | 2-1 | 2-2 | 2-3 | 2-4 | 2-5 | 2-6 | 2-7 |
| | Polyester resin (A) | Kind | - | PET1 | PET1 | PET1 | PET1 | PET 1 | PET1 | PET1 | PET1 | PET1 | PET1 | PET1 | PET1 | PET1 |
| | | Content in packaging body | % by mass | 97.5 | 97.4 | 97.6 | 97.6 | 97.9 | 96.6 | 98.3 | 98.1 | 98.4 | 98.4 | 98.6 | 96.3 | 95.0 |
| | Polyamide resin (B) | Kind | - | PA1 | PA1 | PA2 | PA4 | PA3 | PA5 | PA1 | PA1 | PA2 | PA3 | PA4 | PA4 | PA4 |
| | | Phosphorus atom concentration | ppm | 137 | 137 | 95 | 11 | 49 | 172 | 137 | 137 | 95 | 49 | 11 | 11 | 11 |
| | | Content in packaging body | % by mass | 2.5 | 2.6 | 2.4 | 2.4 | 2.1 | 3.4 | 1.7 | 1.9 | 1.6 | 1.6 | 1.4 | 3.7 | 5.0 |
| | Oxidation reaction accelerator (C) | Kind of transition metal | - | Co | Co | Co | Co | Co | Co | Co | Co | Co | Co | Co | Co | Co |
| | | Transition metal concentration in packaging body | ppm | 78 | 78 | 78 | 78 | 78 | 77 | 79 | 78 | 79 | 79 | 79 | 77 | 76 |
| Bottle volume | | | mL | 500 | 500 | 500 | 500 | 500 | 500 | 500 | 500 | 500 | 500 | 500 | 500 | 500 |
| Bottle mass | | | g | 25 | 25 | 25 | 25 | 25 | 25 | 25 | 25 | 25 | 25 | 25 | 25 | 25 |

EP 3 009 375 B1

(continued)

| | | | Example | | | | | | Comparative Example | | | | | | |
|---|---|---|---|---|---|---|---|---|---|---|---|---|---|---|---|
| | | | 1-1 | 1-2 | 1-3 | 1-4 | 1-5 | 2-1 | 2-1 | 2-2 | 2-3 | 2-4 | 2-5 | 2-6 | 2-7 |
| Evaluation results | Haze of bottle barrel | % | 4.5 | 5.6 | 4.6 | 5.1 | 4.3 | 7.5 | 3.3 | 3.8 | 3.3 | 3.4 | 2.9 | 9.1 | 12.1 |
| | YI of bottle barrel | - | 7.5 | 7.9 | 6.7 | 8.1 | 6.8 | 9.6 | 6.0 | 6.6 | 6.1 | 7.1 | 6.2 | 11.1 | 13.4 |
| | Oxygen transmission rate after a lapse of 100 hours after preparing of bottle | cc/ (package day 0.21. atm) | 0.0009 | 0.0008 | 0.0010 | 0.0010 | 0.0026 | 0.0005 | 0.029 | 0.027 | 0.03 | 0.028 | 0.03 | 0.0005 | 0.0004 |
| | Value of expression (1B): $X/\{2.5 \times V^2/(M - 8)\}$ | - | 0.02 | 0.02 | 0.03 | 0.03 | 0.07 | 0.01 | 0.79 | 0.73 | 0.82 | 0.76 | 0.82 | 0.01 | 0.01 |
| | Preservation rate of vitamin C | % | 96 | 97 | 96 | 96 | 96 | 97 | 87 | 88 | 86 | 87 | 86 | 97 | 98 |

As shown in Table 3, according to the preservation method of the present invention, it is understood that in view of the fact that the haze value and YI value of the packaging body are low without relying upon the phosphorus content in the polyamide resin (B) to be used for the packaging body (bottle), the visibility of the contents is excellent; that in view of the fact that the oxygen transmission rate of the packaging body after a lapse of 100 hours after preparing of the packaging body is low, the induction period until the oxygen absorption performance is exhibited is short; and that in view of the fact that the preservation rate of vitamin C is high, the oxidation deterioration of the contents may be suppressed, and the preservability is excellent. That is, according to the preservation method of the present invention, both preservability and visibility of the contents may be made compatible with each other without relying upon the phosphorus content in the polyamide resin (B) to be used for the packaging body.

Industrial Applicability

The packaging body and the preservation method according to the present invention are not only capable of suppressing oxidation deterioration of the contents from the beginning of preservation but also excellent in visibility of the contents, without relying upon the phosphorus content in a polyamide resin to be used for the packaging body. For that reason, the packaging body and the preservation method according to the present invention are suitably used for preservation of various goods, such as foods, beverages, and pharmaceutical products, etc.

Reference Signs List

1: Cross section of packaging body in the thickness direction
2: Dispersed particle of polyamide resin (B)
3: Path of oxygen molecule transmitting through packaging body

**Claims**

1. A packaging body consisting of a resin composition comprising a polyester resin (A), a polyamide resin (B), and an oxidation reaction accelerator (C), wherein
   the amount of a phosphorus atom-containing compound in the polyamide resin (B) is 5 to 500 ppm, in terms of a phosphorus atom concentration in the polyamide resin (B),

   when a thickness of the packaging body is defined as d ($\mu$m), and an average long diameter, an average short diameter, and a volume fraction of dispersed particles of the polyamide resin (B) in the packaging body are defined as L ($\mu$m), W ($\mu$m), and Vf, respectively, the following expression (1A) is satisfied;
   an oxygen transmission rate after a lapse of 100 hours after preparing of the packaging body is 0.006 [cc/(package · day · 21278 Pa (0.21 atm))] or less; and
   a haze value, measured in conformity with JIS K7105, is 8% or less:

   $$10 < d \times L \times Vf/2W < 120 \qquad (1A),$$

   wherein the oxygen transmission rate after a lapse of 100 hours was determined by passing nitrogen of 101325 Pa (1 atm) at a rate of 20 cc/min through an interior of the packaging body under a condition at an oxygen partial pressure of 21278 Pa (0.21 atm) and under conditions at an interior humidity of the bottle of 100% RH, an external humidity of 50% RH, and a temperature of 23°C, and detecting oxygen contained in the nitrogen after passing through the interior of the packaging body with a coulometric sensor.

2. The packaging body according to claim 1, wherein the thickness d of the packaging body is 200 to 400 $\mu$m.

3. The packaging body according to claim 1 or 2, wherein the polyamide resin (B) comprises a diamine unit comprising 70 mol% or more of a xylylenediamine unit and a dicarboxylic acid unit comprising 70 mol% or more of an $\alpha,\omega$-aliphatic dicarboxylic acid unit.

4. The packaging body according to any one of claims 1 to 3, wherein the polyamide resin (B) comprises polymetaxylylene adipamide.

5. The packaging body according to any one of claims 1 to 4, wherein a content of the polyamide resin (B) in the packaging body is 2.0 to 3.5% by mass.

6. The packaging body according to any one of claims 1 to 5, wherein the polyester resin (A) comprises an aromatic dicarboxylic acid unit and an aliphatic diol unit, the aromatic dicarboxylic acid unit comprises 70 mol% or more of a terephthalic acid unit, and the aliphatic diol unit comprises 70 mol% or more of an aliphatic glycol unit having 2 to 4 carbon atoms.

7. The packaging body according to claim 6, wherein the polyester resin (A) further comprises 0.01 to 2 mol% of a unit derived from a sulfoisophthalic acid metal salt, as the dicarboxylic acid unit.

8. The packaging body according to any one of claims 1 to 7, wherein the oxidation reaction accelerator (C) comprises a transition metal element.

9. The packaging body according to claim 8, wherein the transition metal element is at least one selected from cobalt, iron, manganese, and nickel.

10. The packaging body according to any one of claims 1 to 9, wherein a volume of the packaging body is 0.1 to 2.0 dm$^3$.

11. The packaging body according to any one of claims 1 to 10, wherein a YI value of the packaging body, measured in conformity with JIS K7373, is 10 or less.

12. The packaging body according to any one of claims 1 to 11, wherein the packaging body is a bottle.

13. A method for preserving goods, wherein the packaging body according to any one of claims 1 to 12 is used.

14. The method according to claim 13, wherein the packaging body is a bottle.

15. The method according to claim 13 or 14, wherein the goods are selected from foods, beverages, and pharmaceutical products.


**Patentansprüche**

1. Ein Verpackungskörper, bestehend aus einer Harzzusammensetzung, die ein Polyesterharz (A), ein Polyamidharz (B) und einen Oxidationsreaktionsbeschleuniger (C) umfasst, wobei
   die Menge einer Phosphoratom enthaltenden Verbindung in dem Polyamidharz (B) 5 bis 500 ppm, ausgedrückt als Phosphoratomkonzentration in dem Polyamidharz (B), beträgt,
   wenn eine Dicke des Verpackungskörpers als d (μm) definiert ist und ein mittlerer langer Durchmesser, ein mittlerer kurzer Durchmesser und eine Volumenfraktion von dispergierten Teilchen des Polyamidharzes (B) in dem Verpackungskörper als L (μm), W (μm) bzw. Vf definiert sind, der folgende Ausdruck (1A) erfüllt ist;
   eine Sauerstoffdurchlässigkeitsrate nach Verstreichen von 100 Stunden nach der Herstellung des Verpackungskörpers 0,006 [cm$^3$/(Packung · Tag · 21278 Pa (0,21 atm))] oder weniger beträgt; und
   ein Trübungswert, gemessen gemäß JIS K7105, 8% oder weniger beträgt:

$$10 < d \times L \times Vf/2W < 120 \qquad (1A),$$

   wobei die Sauerstoffdurchlässigkeitsrate nach Verstreichen von 100 Stunden durch Hindurchleiten von Stickstoff mit 101325 Pa (1 atm) bei einer Rate von 20 cm$^3$/min durch ein Inneres des Verpackungskörpers unter einer Bedingung eines Sauerstoffpartialdrucks von 21278 Pa (0,21 atm) und unter Bedingungen einer Innenfeuchte der Flasche von 100% relativer Feuchte, einer Außenfeuchte von 50% relativer Feuchte und einer Temperatur von 23°C und Nachweis von in dem Stickstoff enthaltenem Sauerstoff nach Hindurchleiten durch das Innere des Verpackungskörpers mit einem coulometrischen Sensor ermittelt wurde.

2. Der Verpackungskörper nach Anspruch 1, wobei die Dicke d des Verpackungskörpers 200 bis 400 μm beträgt.

3. Der Verpackungskörper nach Anspruch 1 oder 2, wobei das Polyamidharz (B) eine Diamineinheit, die 70 Mol-% oder mehr einer Xylylendiamineinheit umfasst, und eine Dicarbonsäureeinheit, die 70 Mol-% oder mehr einer α,ω-aliphatischen Dicarbonsäureeinheit umfasst, umfasst.

4.  Der Verpackungskörper nach einem der Ansprüche 1 bis 3, wobei das Polyamidharz (B) Polymetaxylylenadipamid umfasst.

5.  Der Verpackungskörper nach einem der Ansprüche 1 bis 4, wobei ein Gehalt des Polyamidharzes (B) in dem Verpackungskörper 2,0 bis 3,5 Massen-% beträgt.

6.  Der Verpackungskörper nach einem der Ansprüche 1 bis 5, wobei das Polyesterharz (A) eine aromatische Dicarbonsäureeinheit und eine aliphatische Dioleinheit umfasst, die aromatische Dicarbonsäureeinheit 70 Mol-% oder mehr einer Terephthalsäureeinheit umfasst und die aliphatische Dioleinheit 70 Mol-% oder mehr einer aliphatischen Glycoleinheit mit 2 bis 4 Kohlenstoffatomen umfasst.

7.  Der Verpackungskörper nach Anspruch 6, wobei das Polyesterharz (A) weiter 0,01 bis 2 Mol-% einer von einem Sulfoisophthalsäure-Metallsalz abgeleiteten Einheit als die Dicarbonsäureeinheit umfasst.

8.  Der Verpackungskörper nach einem der Ansprüche 1 bis 7, wobei der Oxidationsreaktionsbeschleuniger (C) ein Übergangsmetallelement umfasst.

9.  Der Verpackungskörper nach Anspruch 8, wobei das Übergangsmetallelement mindestens eines, ausgewählt aus Cobalt, Eisen, Mangan und Nickel, ist.

10. Der Verpackungskörper nach einem der Ansprüche 1 bis 9, wobei ein Volumen des Verpackungskörpers 0,1 bis 2,0 $dm^3$ beträgt.

11. Der Verpackungskörper nach einem der Ansprüche 1 bis 10, wobei ein YI-Wert des Verpackungskörpers, gemessen gemäß JIS K7373, 10 oder weniger beträgt.

12. Der Verpackungskörper nach einem der Ansprüche 1 bis 11, wobei der Verpackungskörper eine Flasche ist.

13. Ein Verfahren zur Konservierung von Gütern, wobei der Verpackungskörper nach einem der Ansprüche 1 bis 12 verwendet wird.

14. Das Verfahren nach Anspruch 13, wobei der Verpackungskörper eine Flasche ist.

15. Das Verfahren nach Anspruch 13 oder 14, wobei die Güter aus Nahrungsmitteln, Getränken und pharmazeutischen Produkten ausgewählt sind.

**Revendications**

1.  Corps d'emballage constitué d'une composition de résine comprenant une résine de polyester (A), une résine de polyamide (B), et un accélérateur de réaction d'oxydation (C), dans lequel
    la quantité d'un composé contenant un atome de phosphore dans la résine de polyamide (B) est de 5 à 500 ppm, en termes de concentration en atome de phosphore dans la résine de polyamide (B),
    quand une épaisseur du corps d'emballage est définie par d (μm), et qu'un diamètre long moyen, qu'un diamètre court moyen, et qu'une fraction volumique de particules dispersées de la résine de polyamide (B) dans le corps d'emballage sont définis par L (μm), W (μm), et Vf, respectivement, l'expression (1A) suivante est satisfaite ;
    un taux de transmission d'oxygène après un laps de temps de 100 heures après la préparation du corps d'emballage est de 0,006 [cc/(jour · d'emballage · 21 278 Pa (0,21 atm))] ou moins ; et
    une valeur de trouble, mesurée conformément à la norme JIS K7105, est de 8 % ou moins :

$$10 < d \times L \times Vf/2W < 120 \qquad (1A),$$

    dans lequel le taux de transmission d'oxygène après un laps de temps de 100 heures a été déterminé en passant de l'azote à 101 325 Pa (1 atm) à un débit de 20 cc/minute à travers un intérieur du corps d'emballage dans des conditions de pression partielle en oxygène de 21 278 Pa (0,21 atm) et dans des conditions d'humidité intérieure de la bouteille de 100 % de HR, d'humidité extérieure de 50 % de HR, et de température de 23 °C, et en détectant l'oxygène contenu dans l'azote après passage à travers l'intérieur du corps d'emballage avec un capteur coulométrique.

2. Corps d'emballage selon la revendication 1, dans lequel l'épaisseur d du corps d'emballage est de 200 à 400 $\mu$m.

3. Corps d'emballage selon la revendication 1 ou 2, dans lequel dans lequel la résine de polyamide (B) comprend un motif de diamine comprenant 70 % en mole ou plus d'un motif de xylylènediamine et un motif d'acide dicarboxylique comprenant 70 % en mole ou plus d'un motif d'acide $\alpha,\omega$-dicarboxylique aliphatique.

4. Corps d'emballage selon l'une quelconque des revendications 1 à 3, dans lequel la résine de polyamide (B) comprend un polymétaxylylène adipamide.

5. Corps d'emballage selon l'une quelconque des revendications 1 à 4, dans lequel une teneur de la résine de polyamide (B) dans le corps d'emballage est de 2,0 à 3,5 % en masse.

6. Corps d'emballage selon l'une quelconque des revendications 1 à 5, dans lequel la résine de polyester (A) comprend un motif d'acide dicarboxylique aromatique et un motif de diol aliphatique, le motif d'acide dicarboxylique aromatique comprend 70 % en mole ou plus d'un motif d'acide téréphtalique, et le motif de diol aliphatique comprend 70 % en mole ou plus d'un motif de glycol aliphatique contenant 2 à 4 atomes de carbone.

7. Corps d'emballage selon la revendication 6, dans lequel la résine de polyester (A) comprend en outre 0,01 à 2 % en mole d'un motif dérivé d'un sel métallique d'acide sulfoisophtalique, en tant que motif d'acide dicarboxylique.

8. Corps d'emballage selon l'une quelconque des revendications 1 à 7, dans lequel l'accélérateur de réaction d'oxydation (C) comprend un élément de métal de transition.

9. Corps d'emballage selon la revendication 8, dans lequel l'élément de métal de transition est au moins un sélectionné parmi le cobalt, le fer, le manganèse, et le nickel.

10. Corps d'emballage selon l'une quelconque des revendications 1 à 9, dans lequel un volume du corps d'emballage est de 0,1 à 2,0 dm$^3$.

11. Corps d'emballage selon l'une quelconque des revendications 1 à 10, dans lequel une valeur YI du corps d'emballage, mesurée conformément à la norme JIS K7373, est de 10 ou moins.

12. Corps d'emballage selon l'une quelconque des revendications 1 à 11, dans lequel le corps d'emballage est une bouteille.

13. Procédé de conservation de marchandises, dans lequel le corps d'emballage est utilisé selon l'une quelconque des revendications 1 à 12.

14. Procédé selon la revendication 13, dans lequel le corps d'emballage est une bouteille.

15. Procédé selon la revendication 13 ou 14, dans lequel les marchandises sont sélectionnées parmi les produits alimentaires, les boissons, et les produits pharmaceutiques.

# FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011037136 A
- JP 2003341747 A
- JP H641422 A